(19) Europäisches Patentamt
European Patent Office
Office européen des brevets

(11) EP 2 698 403 B1

(12) EUROPÄISCHE PATENTSCHRIFT

(45) Veröffentlichungstag und Bekanntmachung des Hinweises auf die Patenterteilung:
**03.01.2018 Patentblatt 2018/01**

(51) Int Cl.:
***C09C 1/00*** *(2006.01)*

(21) Anmeldenummer: **12180892.7**

(22) Anmeldetag: **17.08.2012**

# (54) Oberflächenmodifizierte Perlglanzpigmente und deren Verwendung in Pulverlacken

Surface modified pearlescent pigments and their use in powder coatings

Pigments nacrés modifiés en surface et leur utilisation dans les laques en poudre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.02.2014 Patentblatt 2014/08**

(73) Patentinhaber: **Eckart GmbH**
**91235 Hartenstein (DE)**

(72) Erfinder:
- **Grüner, Michael**
**91275 Auerbach (DE)**
- **Schneider, Thomas**
**91207 Lauf a. d. Pegnitz (DE)**
- **Albert, Roland**
**91238 Offenhausen (DE)**
- **Kaupp, Günter**
**91284 Neuhaus (DE)**

(74) Vertreter: **Walcher, Armin**
**Louis, Pöhlau, Lohrentz**
**Patentanwälte**
**Postfach 30 55**
**90014 Nürnberg (DE)**

(56) Entgegenhaltungen:
**EP-A1- 0 141 174**
**WO-A1-2009/156275**
**WO-A1-2010/003660**
**DE-A1-102005 037 612**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 698 403 B1

**Beschreibung**

Die Erfindung betrifft oberflächenmodifizierte Perlglanzpigmente zur bevorzugten Verwendung in Pulverlacken. Weiterhin betrifft die Erfindung ein Verfahren zur Herstellung dieser Perlglanzpigmente, deren Verwendung in Pulverlacken, Pulverlacke umfassend die oberflächenmodifizierten Perlglanzpigmente sowie die Verwendung dieser Pulverlacke.

Pulverlacke sind als lösemittelfreie Lacksysteme hinsichtlich immer strenger werdender Umweltauflagen, wie VOC-Richtlinien, in vielen Anwendungsbereichen eine Alternative zu konventionellen Nasslacksystemen. Pulverlacke werden beispielsweise beim Lackieren von Fahrzeugteilen, Gartenmöbeln, Campingartikeln, Haushaltsgeräten, Kühlschränken oder Regalen eingesetzt. Größtenteils werden metallische Gegenstände lackiert, möglich ist aber auch eine Lackierung von z. B. Kunststoffen oder Glas.

Die umweltfreundlichen und vielseitig einsetzbaren Pulverlacke enthalten Bindemittel, Pigmente, Füllstoffe und Vernetzer sowie optional Additive.

Die Pulverlacktechnologie basiert auf dem Prinzip der elektrostatischen Aufladung, wobei die elektrostatische Aufladung des Pulverlacks üblicherweise durch das Corona-Verfahren oder das triboelektrische Verfahren erfolgt.

Pulverlacke können zur Erzielung unterschiedlicher Farben und/oder optischer Effekte mit organischen oder anorganischen Farbmitteln und/oder plättchenförmigen Effektpigmenten, wie Metalleffektpigmenten oder Perlglanzpigmenten, pigmentiert sein.

Werden Pulverlackharze beispielsweise mit organischen oder anorganischen Pigmenten versehen, so werden diese zusammen mit anderen Pulverlackbestandteilen, wie Härtern, Additiven oder Füllstoffen, nach dem Vermischen extrudiert und nach weiteren Prozessschritten zum gebrauchsfertigen Pulverlack vermahlen. Plättchenförmige Effektpigmente, wie Perlglanzpigmente, werden normalerweise nicht auf diese Weise in einen Pulverlack eingearbeitet. Sie werden durch die einwirkenden Scherkräfte zerstört und ergeben somit keine optisch ansprechende Pulverlackierung.

Zur Einarbeitung plättchenförmiger Perlglanzpigmente in einen Pulverlack stehen alternative Verfahren zur Verfügung. Zum einen das sogenannte Dry blend-Verfahren, bei dem plättchenförmige Perlglanzpigmente und Pulverlack gemischt werden. Aufgrund der unterschiedlichen Form und Aufladbarkeit der plättchenförmigen Perlglanzpigmente und des Pulverlacks kann es bei der Applikation zur Entmischung kommen, was die Wiederverwendung des Oversprays erschwert bzw. unmöglich macht. Diese Entmischung kommt mit zunehmender Pigmentierungshöhe stärker zum Tragen. Würde man den Overspray erneut applizieren, hätte die erhaltene Pulverlackbeschichtung veränderte optische Eigenschaften. Beim Corona-Verfahren ist als weiterer Nachteil von Pulverlacken, die nach dem Dry blend-Verfahren hergestellt werden, das Anhaften von Perlglanzpigmenten an Elektrode und Prallteller der Pulverlackpistole zu nennen. Derartige Agglomerate werden ab einer gewissen Größe von der Förderluft mitgerissen und führen nach Auftreffen auf dem zu beschichtenden Substrat zu Lackierfehlern, also einem unerwünschten optischen Erscheinungsbild. Gelangen die Agglomerate in den Overspray kommt es dort zu einer Anreicherung der Perlglanzpigmente, was sich nachteilig auf die erneute Verwendung auswirkt.

Alternativ können plättchenförmige Perlglanzpigmente nach dem sogenannten Bonding-Verfahren in Pulverlacke eingearbeitet werden. Hierbei wird der Pulverlack in Gegenwart der plättchenförmigen Perlglanzpigmente bis zur Erweichungstemperatur erwärmt und dadurch oberflächlich angeschmolzen, was zu einer mehr oder weniger vollständigen physikalischen Adhäsion der plättchenförmigen Perlglanzpigmente an die einzelnen Pulverlackpartikel führt. Somit lässt sich die beim Dry blend-Verfahren auftretende Entmischung vermeiden.

Mittels der Pulverlacktechnologie lassen sich Lackschichten mit höheren Schichtdicken als mit konventionellen Lackierverfahren aufbringen, was hinsichtlich der chemischen und physikalischen Beständigkeit von Vorteil sein kann. Die Schichtdicke beeinflusst neben der Wirtschaftlichkeit der Lackierung auch beispielsweise die Passgenauigkeit bei der Montage von pulverlackierten Elementen.

Aus EP 2318463 A1 sind Metalleffektpigmente bekannt, welche mit einem Polysiloxan belegt sind.

Die EP 0 141 174 A1 betrifft witterungsbeständige Perlglanzpigmente. Die DE 10 2005 037 612 A1 offenbart oberflächenbelegte Perlglanzpigmente, Verfahren zu deren Herstellung und deren Verwendung. Die WO 2009/156275 A1 betrifft Pigmentmischungen.

Der vorliegenden Erfindung lag die Aufgabe zugrunde, Perlglanzpigmente insbesondere für die Verwendung in für den Innen- und Außenbereich geeigneten Pulverlacken zur Verfügung zu stellen. Die Perlglanzpigmente sollen dafür geeignet sein über alle gängigen Verfahren, also Dry blend-, Bonding- und Extrusionsverfahren, in einen Pulverlack eingearbeitet werden zu können, und dabei je nach Herstellungsverfahren sogar optische Eigenschaften aufweisen, die bisher in ihrer Intensität im Pulverlack noch unbekannt waren. Darüber hinaus sollen Pulverlacke, welche diese Perlglanzpigmente umfassen, kratzfest und abriebstabil sein.

Die Aufgabe wurde gelöst durch Bereitstellung von Perlglanzpigmenten gemäß Anspruch 1.

Die Bindung an die Pigmentoberfläche der Perlglanzpigmente kann dabei kovalent, ionisch und/oder über van-der-Waals-Kräfte und/oder Wasserstoffbrücken erfolgen. Gemäß einer Variante erfolgt die Bindung an die Pigmentoberfläche, zumindestens teilweise, durch eine kovalente Bindung. Gemäß einer bevorzugten Variante erfolgt die Bindung

an die Pigmentoberfläche, über mindestens eine (Zahl: 1) kovalente Bindung.

Bevorzugte Weiterbildungen der erfindungsgemäßen Perlglanzpigmente sind in den Unteransprüchen 2 bis 5 angegeben.

Die Aufgabe wurde ferner gelöst durch Bereitstellung eines Verfahrens zur Herstellung der erfindungsgemäßen Perlglanzpigmente, wobei die Oberfläche der Perlglanzpigmente mit einem Polysiloxan der Formel (II),

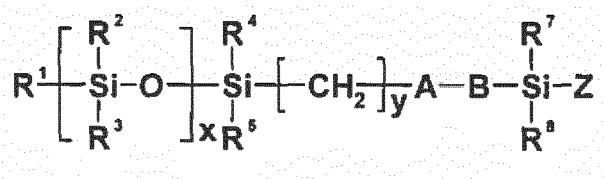

(II)

vorzugsweise unter hydrolytischen Bedingungen, umgesetzt wird, wobei Z für eine hydrolysierbare Gruppe steht und $R^7$ und $R^8$ unabhängig voneinander jeweils für eine hydrolysierbare Gruppe stehen oder $R^7$ und $R^8$ unabhängig voneinander für einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen.

Die hydrolysierbare Gruppe Z umfasst beispielsweise Hydroxy, Halogen, beispielsweise F, Cl, Br und/oder I, und/oder $OR^9$ und/oder $O(C{=}O)R^9$, wobei $R^9$ für einen gesättigten, geradkettigen oder verzweigten Alkylrest mit 1 bis 6 Kohlenstoffatomen steht, wobei der Alkylrest O enthalten kann.

R7 und R8 können, wenn R7 und R8 hydrolysierbare Gruppen sind, unabhängig voneinander für Halogen, vorzugsweise Cl, $OR^9$ und/oder $O(C{=}O)R^9$, wobei $R^9$ für einen gesättigten, geradkettigen oder verzweigten Alkylrest mit 1 bis 6 Kohlenstoffatomen steht, wobei der Alkylrest O enthalten kann, stehen.

Bei der vorliegenden Erfindung ist das Polysiloxan gemäß Formel (I) ein an die Pigmentoberfläche über wenigstens ein (Zahl: 1) Sauerstoffatom oder eine (Zahl: 1) Hydroxylgruppe gebundenes Polysiloxan. Das Polysiloxan gemäß Formel (II) bezeichnet das Polysiloxan vor der Hydrolyse, mithin die Ausgangssubstanz, die nach der Hydrolyse an die Pigmentoberfläche bindet.

Die Aufgabe wurde ferner gelöst durch Bereitstellung eines Pulverlacks enthaltend mindestens ein Bindemittel sowie erfindungsgemäße Perlglanzpigmente.

Die Aufgabe wurde ferner gelöst durch Bereitstellung eines Verfahren zur Herstellung eines Pulverlackes, welches folgende Schritte umfasst:

(a) Extrudieren eines Perlglanzpigmentes nach einem der Ansprüche 1 bis 5 zusammen mit Bindemittel und optional weiteren Bestandteilen eines Pulverlacks,
(b) optional Vermahlen des in Schritt (a) erhaltenen Extrudats.

Die Aufgabe wurde ferner gelöst durch Bereitstellung eines Verfahrens zur Herstellung eines Pulverlackes im Dry Blend-Verfahren durch Mischen eines Perlglanzpigmentes nach einem der Ansprüche 1 bis 5 mit einem Bindemittel und optional weiteren Bestandteilen eines Pulverlacks.

Die Aufgabe wurde ferner gelöst durch Bereitstellung eines Bonding Verfahrens zur Herstellung eines Pulverlackes, welches folgende Schritte umfasst:

(a) Mischen eines Perlglanzpigmentes nach einem der Ansprüche 1 bis 5 mit einem Bindemittel und optional weiteren Bestandteilen eines Pulverlackes,
(b) Erwärmen der in Schritt (a) erhaltenen Mischung bis zur Erweichungstemperatur des Bindemittels und optional weiteren Bestandteilen eines Pulverlackes unter Anhaftung von Perlglanzpigmenten und Bindemitteln sowie optional weiteren Bestandteilen eines Pulverlackes,
(c) Abkühlen der in Schritt (b) erhaltenen Mischung.

Die der Erfindung zugrundeliegende Aufgabe wurde ferner durch Verwendung von Perlglanzpigmenten nach einem der Ansprüche 1 bis 5 in Pulverlacken gelöst.

Weiterhin wurde die Aufgabe der Erfindung durch die Verwendung von Perlglanzpigmenten gemäß einem der Ansprüche 1 bis 5 zur Herstellung von Pulverlacken durch Extrusion einer Mischung von Perlglanzpigmenten und Pulverlack-Bindemittel und anschließender Vermahlung des erhaltenen Extrudats, durch Mischen im Dry blend-Verfahren oder durch Bonding-Verfahren gelöst.

Bei den erfindungsgemäßen Perlglanzpigmenten ist das Polysiloxan gemäß Formel (I) vorzugsweise über ein

oder mehrere Sauerstoffatome mit der äußersten Metalloxid-, Metallhydroxid- und/oder Metalloxidhydratschicht, vorzugsweise kovalent, verbunden. Das Polysiloxan wird über ein (Zahl: 1) Sauerstoffatom mit der Metalloxidschicht verbunden, wenn X = O ist und $R^7$ und $R^8$ nicht für O stehen, sondern für Alkyl- oder Arylrest stehen. Eine Bindung des Polysiloxans gemäß Formel (I) über zwei Sauerstoffatome kann dann erfolgen, wenn neben X = O entweder $R^7$ oder $R^8$ auch für O stehen. Eine, vorzugsweise kovalente, Bindung des Polysiloxans gemäß Formel (I) über drei Sauerstoffatome kann dann erfolgen, wenn neben X = O auch $R^7$ und $R^8$ auch für O stehen. Auch wenn $R^7$ und/oder $R^8$ jeweils für ein Sauerstoffatom stehen, muss nicht notwendigerweise eine direkte Bindung über drei bzw. zwei Sauerstoffatome mit der Oberfläche der äußersten Metalloxid-, Metallhydroxid- und/oder Metalloxidhydratschicht erfolgen. Es ist auch möglich, dass nach Hydrolyse der Ausgangsverbindung unter Kondensation der entstehenden Hydroxylgruppen und nachfolgender Wasserabspaltung auch eine sauerstoffverbrückte Bindung zu einem oder zu mehreren anderen Polysiloxanen gemäß Formel (I) ausgebildet wird. Somit kann die kovalente Bindung eines Polysiloxans gemäß Formel (I) auch indirekt an die äußerste Metalloxid-, Metallhydroxid- und/oder Metalloxidhydratoberfläche erfolgen. Die Bindung an die äußerste Metalloxid-, Metallhydroxid- und/oder Metalloxidhydratoberfläche, also die Pigmentoberfläche kann auch über ionische Wechselwirkungen, van-der-Waals-Kräfte und/oder Wasserstoffbrücken erfolgen.

Selbstverständlich kann die Bindung des Polysiloxans gemäß Formel (I) auch direkt an die äußerste Metalloxid-, Metallhydroxid- und/oder Metalloxidhydratoberfläche des Perlglanzpigmentes über eine (Zahl: 1), zwei oder drei Sauerstoffatome erfolgen.

Es hat sich überraschend gezeigt, dass die erfindungsgemäßen Perlglanzpigmente, die mit einem Polysiloxan gemäß Formel (I) beschichtet sind, zusammen mit Pulverlackharz, beispielsweise durch Extrusion, kompaktiert werden können, ohne dass es zu einer merklichen Beeinträchtigung der optischen Eigenschaften der Perlglanzpigmente bzw. des mit den erfindungsgemäßen Perlglanzpigmenten pigmentierten Pulverlackes kommt. Das erhaltene Extrudat kann dann zu einer gewünschten Partikelgröße vermahlen werden, wobei es überraschenderweise ebenfalls nicht zu einer wesentlichen Beeinträchtigung der optischen Eigenschaften der Perlglanzpigmente bzw. des mit den erfindungsgemäßen Perlglanzpigmenten pigmentierten Pulverlackes kommt. Mithin kann so ein Pulverlack oder ein Pulverlackkonzentrat in der Form eines Masterbatches direkt bereitgestellt werden, wobei die typischen Eigenschaften der Perlglanzpigmente erhalten bleiben.

Die Beschichtung mit dem Polysiloxan gemäß Formel (I) bewirkt mithin einen überraschend effektiven Schutz der Perlglanzpigmente gegenüber mechanischer Belastung. Insbesondere zeichnen sich solche Perlglanzpigmente durch eine deutliche Stabilisierung beim Extrudieren aus. Trotz der hohen Scherkräfte dieses Verfahrens werden die erfindungsgemäßen Perlglanzpigmente weit weniger in ihren optischen Eigenschaften vermindert, als entsprechende Perlglanzpigmente ohne Oberflächenmodifizierung gemäß Formel (I).

Darüber hinaus wurde überraschenderweise festgestellt, dass die erfindungsgemäßen Perlglanzpigmente in Pulverlacken, unabhängig vom Herstellungsverfahren, wesentlich verbesserte Überlackierungseigenschaften bewirken. Im Vergleich zu Pulverlackbeschichtungen mit Perlglanzpigmenten, welche mit einer phosphonsäurehaltigen Beschichtung versehen sind, kann zur Korrosionsstabilisierung, zur Erhöhung der Kratzfestigkeit, als auch aus ästhetischen Gründen bei Verwendung eines erfindungsgemäßen Pulverlackes eine zusätzliche erfindungsgemäße Klarlackschicht aufgebracht werden, ohne dass sich diese beispielsweise durch eine Gitterschnittprüfung leicht wieder ablösen lässt bzw. brüchig wird.

Somit können die erfindungsgemäßen Perlglanzpigmente nach Aufbringung mittels Pulverlackbeschichtung und nachfolgendem Klarlackauftrag auch harschen Umgebungsbedingungen, wie Feuchtigkeit, starken Temperaturschwankungen, etc. ausgesetzt werden.

Ferner zeigten die erfindungsgemäßen Perlglanzpigmente nach Aufbringung mittels Pulverlackbeschichtung im Vergleich zu Perlglanzpigmenten, welche mit einer phosphonsäurehaltigen Beschichtung versehen sind, ein verbessertes Verlaufs- bzw. Nivellierverhalten. Aufgrund des verbesserten Verlaufverhaltens nach einer Lackierung, vorzugsweise Pulverlackierung, wird die Lackoberfläche glatter und ebener. Hierbei war es unerheblich, ob der erfindungsgemäße Pulverlack mittels Extrusions-, Dry blend- oder Bonding-Verfahren hergestellt wurde.

Die erfindungsgemäßen Perlglanzpigmente weisen eine mittlere Teilchengröße $D_{50}$ aus einem Bereich von 2 bis 100 $\mu$m, bevorzugt aus einem Bereich von 3 bis 75 $\mu$m, besonders bevorzugt aus einem Bereich von 4 bis 51 $\mu$m und ganz besonders bevorzugt aus einem Bereich von 5 bis 42 $\mu$m auf.

Der $D_{50}$-Wert der Summenhäufigkeitsverteilung der volumengemittelten Größenverteilungsfunktion, wie sie durch Laserbeugungsmethoden erhalten wird, gibt an, dass 50 % der erfindungsgemäßen Perlglanzpigmente einen Durchmesser aufweisen, der gleich oder kleiner als der jeweils angegebene Wert ist. Hierbei wird die Größenverteilungskurve der Perlglanzpigmente mit einem Gerät der Fa. Malvern (Gerät: MALVERN Mastersizer 2000) gemäß Herstellerangaben bestimmt. Die Auswertung der Streulichtsignale erfolgte dabei nach der Fraunhofer Methode.

Die nichtmetallischen plättchenförmigen Substrate der erfindungsgemäßen Perlglanzpigmente können aus der Gruppe, bestehend aus natürlichen Glimmerplättchen, synthetischen Glimmerplättchen, Glasplättchen, $SiO_2$-Plättchen, $Al_2O_3$-Plättchen, Polymerplättchen, plättchenförmigen Substraten, die eine anorganisch-organische Mischschicht umfassen, ausgewählt werden. Erfindungsgemäß können als Perlglanzpigmente auch solche verwendet werden, deren

Substrate Gemische der vorstehend angegebenen plättchenförmigen Substrate sind.

Bevorzugt werden die nichtmetallischen, plättchenförmigen Substrate aus der Gruppe, bestehend aus natürlichen Glimmerplättchen, synthetischen Glimmerplättchen, Glasplättchen, $SiO_2$-Plättchen, $Al_2O_3$-Plättchen und deren Gemische, ausgewählt. Besonders bevorzugt werden die nichtmetallischen plättchenförmigen Substrate aus der Gruppe, bestehend aus natürlichen Glimmerplättchen, synthetischen Glimmerplättchen, Glasplättchen und deren Gemische, ausgewählt. Ganz besonders bevorzugt sind als Substrate synthetische Glimmerplättchen und Glasplättchen und deren Gemische. Insbesondere sind als Substrat synthetische Glimmerplättchen bevorzugt.

Besteht das nichtmetallische, plättchenförmige synthetische Substrat aus Glasplättchen, so werden im Rahmen dieser Erfindung bevorzugt jene verwendet, die nach den in EP 0 289 240 A1, WO 2004/056716 A1 und der WO 2005/063637 A1 beschriebenen Verfahren hergestellt werden. Die als Substrat verwendbaren Glasplättchen können beispielsweise eine Zusammensetzung entsprechend der Lehre der EP 1 980 594 B1 aufweisen.

Besteht das nichtmetallische plättchenförmige synthetische Substrat aus synthetischem Glimmer, so handelt es sich im Rahmen dieser Erfindung vorzugsweise um Fluorphlogopit. Ganz besonders bevorzugt weist hierbei Fluorphlogopit die Formel $KMg_3AlSi_3O_{10}F_2$auf.

Die mittlere Dicke der zu beschichtenden nichtmetallischen plättchenförmigen Substrate liegt in einem Bereich von 50 nm bis 5000 nm, bevorzugt in einem Bereich von 60 nm bis 3000 nm und besonders bevorzugt in einem Bereich von 70 nm bis 2000 nm. Bei einer Ausführungsform liegt die mittlere Dicke für Glasplättchen als zu beschichtendes Substrat in einem Bereich von 750 nm bis 1500 nm. Derartige Glasplättchen sind kommerziell auf breiter Basis verfügbar. Weitere Vorteile bieten dünnere Glasplättchen. Dünnere Substrate führen zu einer geringeren Gesamtschichtdicke der erfindungsgemäßen Perlglanzpigmente. So sind ebenfalls bevorzugt Glasplättchen, deren mittlere Dicke in einem Bereich von 100 nm bis 700 nm, weiter bevorzugt in einem Bereich von 150 nm bis 600 nm, besonders bevorzugt in einem Bereich von 170 nm bis 500 nm und ganz besonders bevorzugt in einem Bereich 200 nm bis 400 nm liegt.
Bei einer weiteren Ausführungsform liegt die mittlere Dicke für natürliche oder synthetische Glimmerplättchen als zu beschichtendes Substrat bevorzugt in einem Bereich von 100 nm bis 700 nm, weiter bevorzugt in einem Bereich von 150 nm bis 600 nm, besonders bevorzugt in einem Bereich von 170 nm bis 500 nm und ganz besonders bevorzugt in einem Bereich von 200 nm bis 400 nm.

Beschichtet man nichtmetallische plättchenförmige Substrate unterhalb einer mittleren Dicke von 50 nm mit hochbrechenden Metalloxiden, so werden extrem bruchempfindliche Perlglanzpigmente erhalten, die schon beim Einarbeiten in das Anwendungsmedium zerbrechen können, was wiederum eine signifikante Herabsetzung des Glanzes bedingt.
Oberhalb einer mittleren Substratdicke von 5000 nm können die Perlglanzpigmente insgesamt zu dick werden. Damit geht eine schlechtere spezifische Deckfähigkeit, d.h. abgedeckte Fläche pro Gewichtseinheit an erfindungsgemäßem Perlglanzpigment, einher sowie eine geringere planparallele Orientierung im Anwendungsmedium. Aus einer schlechteren Orientierung wiederum resultiert ein verminderter Glanz.

Auch neigen Perlglanzpigmente mit einer mittleren Substratdicke oberhalb von 5000 nm aufgrund ihres größeren Gewichts zu einer verstärkten Separation bei Applikation eines hiermit pigmentierten Pulverlacks, was eine entsprechende Applikation beispielsweise eines im Dry Blend-Verfahren hergestellten Pulverlacks nahezu unmöglich macht.

Die mittlere Dicke des nichtmetallischen plättchenförmigen Substrates wird anhand eines gehärteten Lackfilmes, in dem die Substrate oder Perlglanzpigmente im Wesentlichen planparallel zum Untergrund ausgerichtet sind, bestimmt. Hierzu wird ein Querschliff des gehärteten Lackfilmes unter einem Rasterelektronenmikroskop (REM) untersucht, wobei die Dicke von 100 Substratteilchen oder Perlglanzpigmenten bestimmt und statistisch gemittelt wird.

Die mittlere Dicke der erfindungsgemäßen Perlglanzpigmente wird über die Spreitwertmethode bestimmt.

Das Aspektverhältnis der erfindungsgemäßen Perlglanzpigmente liegt bevorzugt in einem Bereich von 1 bis 1000, besonders bevorzugt in einem Bereich von 10 bis 1000, ganz besonders bevorzugt in einem Bereich von 50 bis 1000.
Das Aspektverhältnis ist definiert als Verhältnis von mittlerer Teilchengröße $D_{50}$ zu mittlerer Dicke h.

Das nichtmetallische plättchenförmige Substrat ist mit wenigstens einer Schicht oder Beschichtung versehen, wobei die wenigstens eine Schicht Metalloxide, Metallhydroxide, Metalloxidhydrate oder Mischungen davon umfasst. Auf der jeweils äußersten Schicht des Perlglanzpigments ist das Polysiloxan gemäß Formel (I) aufgebracht.

Vorzugsweise wird das nichtmetallische plättchenförmige Substrat von der umgebenden Metalloxid-, Metallhydroxid- und/oder Metalloxidhydratschicht oder -beschichtung im Wesentlichen vollständig umhüllt, vorzugsweise vollständig umhüllt.

Wird eine hochbrechende Schicht oder Beschichtung auf das nichtmetallische plättchenförmige Substrat aufgebracht, so liegt der Brechungsindex der hochbrechenden Schicht bei $n \geq 1,8$, bevorzugt bei $n \geq 1,9$ und besonders bevorzugt bei $n \geq 2,0$. Im Falle einer niedrigbrechenden Schicht oder Beschichtung liegt der Brechungsindex bei $n < 1,8$, bevorzugt bei $n < 1,7$ und besonders bevorzugt bei $n < 1,6$.

Als hochbrechende Schicht eignen sich beispielsweise Metalloxide wie Titanoxid, vorzugsweise Titandioxid

($TiO_2$), Eisenoxid, vorzugsweise Eisen(III)oxid ($Fe_2O_3$) und/oder Eisen(II/III)oxid ($Fe_3O_4$), Zirkoniumoxid, vorzugsweise Zirkoniumdioxid ($ZrO_2$), Ceroxid, vorzugsweise Cer(IV)oxid ($CeO_2$) und/oder Cer(III)oxid ($Ce_2O_3$), Chromoxid, vorzugsweise Chrom(III)oxid ($Cr_2O_3$), Metalloxidhydrate wie Goethit (FeOOH), Titanate wie Calciumtitanat ($CaTiO_3$) oder Eisentitanate, wie z.B. Ilmenit ($FeTiO_3$), Pseudobrookit ($Fe_2TiO_5$) und/oder Pseudorutil ($Fe_2Ti_3O_9$), dotierte Metalloxide, wie beispielsweise Titandioxid und Zirkoniumdioxid, die mit selektiv absorbierenden Farbmitteln eingefärbt sind, und/oder deren Gemische. Die zuletzt genannte Einfärbung nicht absorbierender hochbrechender Metalloxide kann z.B. durch Einbau von Farbmitteln in die Metalloxidschicht, durch deren Dotierung mit selektiv absorbierenden Metallkationen oder farbigen Metalloxiden wie Eisen(III)oxid oder durch Überziehen der Metalloxidschicht mit einem ein Farbmittel enthaltenden Film erfolgen.

Anstelle der zuvor genannten Metalloxide kann auch das entsprechende Metallhydroxid oder Metalloxidhydrat vorliegen, es können auch sowohl Metalloxid, Metallhydroxid als auch Metalloxidhydrat nebeneinander in derselben Schicht vorliegen.

Bevorzugt umfasst die hochbrechende Schicht Metalloxide, Metallhydroxide und/oder Metalloxidhydrate von Titan und Eisen.

Bei einer Ausführungsform weisen die erfindungsgemäßen Perlglanzpigmente einen Titandioxidgehalt aus einem Bereich von 10 bis 70 Gew.-%, bezogen auf das Gesamtgewicht des Perlglanzpigmentes, auf.

Bei einer weiteren Ausführungsform weisen die erfindungsgemäßen Perlglanzpigmente einen Eisenoxidgehalt aus einem Bereich von 5 bis 70 Ges.-%, bezogen auf das Gesamtgewicht des Perlglanzpigmentes, auf.

Umfassen die erfindungsgemäßen Perlglanzpigmente sowohl Titandioxid als auch Eisenoxid, so liegt der Gehalt von Titandioxid und Eisenoxid zusammen bei $\leq$70 Gew.-%, bezogen auf das Gesamtgewicht des Perlglanzpigments.

Wird mit Titandioxid beschichtet, kann das Titandioxid in der Rutil- oder Anataskristallmodifikation vorliegen. Vorzugsweise liegt das Titandioxid in der Rutilform vor. Die Rutilform kann unter anderem erhalten werden, indem beispielsweise vor Aufbringung der Titandioxidschicht eine Schicht aus Zinndioxid auf das zu beschichtende plättchenförmige Substrat aufgebracht wird. Auf dieser Schicht aus Zinndioxid kristallisiert Titandioxid in der Rutilmodifikation. Das Zinndioxid kann dabei als separate Schicht vorliegen, wobei die Schichtdicke wenige Nanometer, beispielsweise weniger als 10 nm, weiter bevorzugt weniger als 5 nm, noch weiter bevorzugt weniger als 3 nm, betragen kann. Das Zinndioxid kann aber auch mit dem Titandioxid zumindest teilweise in Mischung vorliegen.

Beispiele für niedrigbrechende Schichten sind unter anderem Metalloxide wie Siliziumoxid, vorzugsweise Siliziumdioxid ($SiO_2$), Aluminiumoxid, vorzugsweise Aluminium(III)oxid ($Al_2O_3$), Boroxid, vorzugsweise Bor(III)oxid ($B_2O_3$), Metallhydroxide wie Siliziumhydroxid, Metalloxidhydrate wie Aluminiumoxidhydrat AlO(OH), Siliziumoxidhydrat, vorzugsweise $SiO_2 \cdot H_2O$ und/oder deren Gemische.

Vorzugsweise umfasst die niedrigbrechende Schicht Siliziumdioxid, -hydroxid, oxidhydrat oder Mischungen davon.

Ist das nichtmetallische plättchenförmige Substrat mit nur einer einzigen Metalloxid-, Metallhydroxid- und/oder Metalloxidhydratschicht beschichtet, so weist diese einen hohen Brechungsindex auf.
Die nichtmetallischen plättchenförmigen Substrate können auch mit einem mehrlagigen Schichtaufbau mit oder bestehend aus Metalloxid, Metallhydroxid und/oder Metalloxidhydrat beschichtet sein, wobei die Reihenfolge der Schichten variabel sein kann. Bevorzugt ist hierbei eine Schichtenfolge, bei dem wenigstens eine hochbrechende Schicht und wenigstens eine niedrigbrechende Schicht in alternierender Weise auf einem Substrat angeordnet sind. Bei der alternierenden Anordnung ist es auch möglich, eine oder mehrere hochbrechende Schichten unmittelbar übereinander und nachfolgend eine oder mehrere niedrigbrechende Schichten unmittelbar übereinander anzuordnen. Wesentlich ist jedoch, dass in dem Schichtaufbau hoch- und niedrigbrechende Schichten vorkommen. Vorzugsweise sind ausgehend vom plättchenförmigen Substrat wenigstens eine hoch-, niedrig- und wiederum hochbrechende Schicht angeordnet, was in Perlglanzpigmenten mit besonders intensiven Interferenzfarben resultiert. Die Interferenzfarbe kann hierbei in Abhängigkeit von Schichtaufbau und -dicken silbern oder nicht silbern sein. Derartige Perlglanzpigmente sind beispielsweise aus DE 10 2009 037 935 A1, DE 10 2009 037 934 A1, DE 10 2009 037 933 A1 oder DE 10 2009 037 932 A1 bekannt.

Die hochbrechende Beschichtung bzw. die alternierend aufgebrachte hoch- und niedrigbrechende Beschichtung ist mit einer Schutzschicht versehen. Diese Schutzschicht ermöglicht die Verwendung der erfindungsgemäßen Perlglanzpigmente in Pulverlacken, welche für Außenanwendungen vorgesehen sind. Erfindungsgemäß ist das Polysiloxan gemäß Formel (I) auf der Schutzschicht aufgebracht. Die Schutzschicht umfasst oder besteht aus Metalloxiden, Metallhydroxiden und/oder Metalloxidhydraten von Silizium, Cer, Chrom oder Mischungen davon. Bei einer Ausführungsform besteht die Schutzschicht mit oder aus Metalloxiden, Metallhydroxiden und/oder Metalloxidhydraten von Silizium. Bei einer weiteren, bevorzugten Ausführungsform besteht die Schutzschicht mit oder aus Metalloxiden, Metallhydroxiden und/oder Metalloxidhydraten von Cer. Bei einer weiteren Ausführungsform besteht die Schutzschicht mit oder aus Metalloxiden, Metallhydroxiden und/oder Metalloxidhydraten von Cer und Silizium. Bei letzterer Ausführungsform ist es bevorzugt, wenn als Schutzschicht zunächst eine Schicht mit oder aus Metalloxiden, Metallhydroxiden und/oder Metalloxidhydraten von Cer und anschließend eine Schicht mit oder aus Metalloxiden, Metallhydroxiden und/oder Metalloxidhydraten von Silizium auf der darunterliegenden, vorzugsweise hochbrechenden Metalloxid-, Metallhydroxid- und/oder Metalloxidhydratschicht aufgebracht wird. Besteht die Schutzschicht aus Metalloxid-, Metallhydroxid- und/oder Metalloxidhydraten sowohl von Cer als auch von Silizium, so kann auch eine Mischschicht vorliegen.

Die Schutzschicht soll möglichst wenig Einfluss auf die optischen Eigenschaften der erfindungsgemäßen Perlglanzpigmente nehmen. Von daher werden Metalloxide, Metallhydroxide und/oder Metalloxidhydrate von Chrom oder Cer, welche durch ihre Eigenfärbung das optische Erscheinungsbild der Perlglanzpigmente verändern können, in einem möglichst geringen Anteil eingesetzt, bevorzugt in einem Bereich von jeweils 0,01 bis 3,0 Gew.-%, weiter bevorzugt in einem Bereich von jeweils 0,01 bis 2,0 Gew.-%, besonders bevorzugt in einem Bereich von jeweils 0,05 bis 1,5 Gew.-% und ganz besonders bevorzugt in einem Bereich von jeweils 0,1 bis 1,0 Gew.-%, jeweils bezogen auf das Gesamtgewicht des Perlglanzpigments.

Metalloxide, Metallhydroxide und/oder Metalloxidhydrate von Silizium, welche keine Eigenfärbung aufweisen, können in einem Bereich von 0,05 bis 10,0 Gew.-%, bevorzugt in einem Bereich von 0,1 bis 8,0 Gew.-%, besonders bevorzugt in einem Bereich von 0,2 bis 7 Gew.-% und ganz besonders bevorzugt in einem Bereich von 0,1 bis 6 Gew.-%, jeweils bezogen auf das Gesamtgewicht des Perlglanzpigments, als Schutzschicht des Perlglanzpigments dienen.

Oben genannte Bereichsangaben für die Metalloxide, Metallhydroxide und/oder Metalloxidhydrate von Cer bzw. Silizium sind jeweils auch zu verwenden, wenn Metalloxide, Metallhydroxide und/oder Metalloxidhydrate sowohl von Cer als auch von Silizium in der Schutzschicht eingesetzt werden.

Die Metalloxid-, Metallhydroxid- und/oder Metalloxidhydratgehalte der Perlglanzpigmente werden mittels Röntgenfluoreszenzanalyse (RFA) bestimmt. Hierzu wird das Perlglanzpigment in eine Lithiumtetraboratglastablette eingearbeitet, in Festprobenmessbechern fixiert und daraus vermessen. Als Messgerät diente das Gerät Advantix ARL, Fa. Thermo Scientific.

Ein Vorteil der Schutzschicht ist, dass bei erfindungsgemäßen Perlglanzpigmenten, die eine Schicht aus Metalloxid, Metallhydroxid- und/oder Metalloxidhydrat von Titan umfassen und die in Pulverlacken für Aussenanwendungen eingesetzt werden, ein photokatalytisch induzierten Abbau der Pulverlackkomponenten und des Oberflächenmodifizierungsmittels unterbunden wird. Die Schutzschicht ist bei Verwendung von Pulverlacken umfassend erfindungsgemäße Perlglanzpigmente im Innenbereich nicht notwendigerweise erforderlich.

Das Polysiloxan gemäß Formel (II) kann direkt an die Oberfläche der Perlglanzpigmente gebunden werden. Die Bindung erfolgt in der Regel und auch bevorzugt unter Kondensation einer oder mehrerer OH-Gruppen des hydrolysierten Polysiloxans, bei dem die Gruppe Z und gegebenenfalls die Gruppen $R^7$ und $R^8$ durch Hydroxylgruppen ersetzt sind, die nachfolgend mit auf der äußersten Metalloxid-, Metallhydroxid- und/oder Metalloxidhydratschicht vorhanden OH-Gruppen oder Sauerstofffunktionen kondensieren unter gleichzeitiger Wasserabspaltung.

Die Anbindung kann jedoch auch beispielsweise über Wasserstoffbrücken nicht kondensierter OH-Gruppen sowohl des Polysiloxans als auch oberflächlicher OH-Gruppen des Perlglanzpigments erfolgen.

Gemäß einer bevorzugten Variante der Erfindung bildet das aufgebrachte Polysiloxan gemäß Formel (I) keine umhüllende Polymer-Beschichtung aus. Es hat sich überraschend gezeigt, dass bereits sehr geringe Mengen an Polysiloxan gemäß Formel (I) ausreichend sind. Das Polysiloxan gemäß Formel (I) ist dabei vorzugsweise direkt auf die äußerste Metalloxid-, Metallhydroxid- und/oder Metalloxidhydratoberfläche aufgebracht ohne Verwendung einer Haft- oder Kopplungsschicht zwischen Metalloxidoberfläche und Oberflächenmodifizierungsmittel.

Das Polysiloxan gemäß Formel (I) enthält keine basischen Gruppen und mithin keine Aminogruppen.

Gemäß einer bevorzugten Ausführungsform stehen $R^2$, $R^3$, $R^4$ und $R^5$ in dem Polysiloxan gemäß Formel (I) unabhängig voneinander für gesättigte Alkylreste wie Methyl, Ethyl, n-Propyl, Isopropyl, n-Butyl, sec-Butyl oder tert.-Butyl und/oder für einen aromatischen Rest wie Phenyl.

Vorzugsweise sind $R^2$, $R^3$, $R^4$ und $R^5$ gleich.

Als sehr geeignet hat sich erwiesen, wenn $R^2$, $R^3$, $R^4$ und $R^5$ jeweils Methyl sind.

Vorzugsweise ist $R^1$ Alkyl, Cycloalkyl oder Aryl mit 1 bis 12 C-Atomen. Als sehr geeignet haben sich als $R^1$ Methyl, Ethyl, sec-Butyl, n-Propyl, Isopropyl, n-Butyl, sec-Butyl, tert.-Butyl, n-Pentyl, Neopentyl, Cyclopentyl, n-Hexyl, Cyclohexyl, n-Octyl, 2-Etylhexyl, Phenyl, Methylphenyl oder Ethylphenyl erwiesen.

Weiterhin bevorzugt ist $R^1$ unverzweigtes Alkyl mit 1 bis 6 Kohlenstoffatomen. Bevorzugt ist $R^1$ Methyl, Ethyl, n-Butyl, n-Hexyl oder Phenyl. Besonders bevorzugt ist $R^1$ n-Butyl oder n-Hexyl.

Gemäß einer bevorzugten Ausführungsform ist $R^1$ verschieden von $R^2$, $R^3$, $R^4$ und $R^5$. Vorzugsweise sind $R^1$ sowie $R^2$, $R^3$, $R^4$ und $R^5$ jeweils Alkylreste, wobei der Alkylrest $R^1$ vorzugsweise wenigstens ein Kohlenstoffatom, weiter bevorzugt wenigstens 2 Kohlenstoffatome, noch weiter bevorzugt wenigstens 3 Kohlenstoffatome, mehr aufweist als die Alkylreste $R^2$, $R^3$, $R^4$ und $R^5$.

Äußerst bevorzugt ist $R^1$ n-Butyl oder n-Hexyl und $R^2$, $R^3$, $R^4$ und $R^5$ jeweils Methyl.

Gemäß einer weiteren bevorzugten Ausführungsform ist y =2 bis 6, und A steht für $(CH_2)_n$, wobei n = 0, und B steht für $(OCH_2CH_2)_w$, wobei w = 0 bis 6 ist.

Vorzugsweise ist y = 2 und A steht für $(CH_2)_n$, wobei n = 0, und B steht für $(OCH_2CH_2)_w$, wobei w = 0 ist.

Ferner ist bevorzugt, dass durchschnittlich $2 \leq x \leq 150$, bevorzugt $2{,}5 \leq x \leq 100$, weiter bevorzugt $3{,}0 \leq x \leq 80$, noch weiter bevorzugt $3{,}5 \leq x \leq 50$. Hierbei beziehen sich die Werte für x auf Durchschnittswerte, da die Polysiloxane

in der Regel als Polymer-/ Oligomergemisch mit unterschiedlichen Molekulargewichten vorliegen.

Die erfindungsgemäßen Perlglanzpigmente weisen bevorzugt einen Gehalt an Polysiloxan gemäß Formel (I) aus einem Bereich von 0,05 bis 10,0 Gew.-%, bevorzugt von 0,1 bis 8,0 Gew.-%, besonders bevorzugt von 0,2 bis 5,0 Gew.-%, jeweils bezogen auf das Gesamtgewicht des Perlglanzpigments, auf.

Der Kohlenstoffgehalt der erfindungsgemäßen Perlglanzpigmente liegt in einem Bereich von 0,01 bis 2,0 Gew.-%, bevorzugt in einem Bereich von 0,01 bis 1,0 Gew.-%, besonders bevorzugt in einem Bereich von 0,02 bis 0,7 Gew.-% und ganz bevorzugt in einem Bereich von 0,02 bis 0,6 Gew.-%, jeweils bezogen auf das Gesamtgewicht des Perlglanzpigments.

Der Kohlenstoffgehalt wird mittels eines Kohlenstoffanalysators CS-200 der Fa. LECO Instrumente GmbH gemessen.

Bei einer weiteren vorteilhaften Ausgestaltung der Erfindung kann die Beschichtung mit Polysiloxan gemäß Formel (I) der Perlglanzpigmente weitere Zusatzstoffe enthalten, beispielsweise organische und/oder anorganische Buntpigmente, Farbstoffe, Korrosionsinhibitoren und/oder UV-Stabilisatoren.

Bei einer weiteren Ausführungsform können neben dem Polysiloxan gemäß Formel (I) weitere Silane auf der Oberfläche der Metalloxid, Metallhydroxid- und/oder Metalloxidhydratschicht aufgebracht werden. Die weiteren Silane können hierbei aus der Gruppe bestehend aus 3-Methacryloxypropyltrimethoxysilan (Dynasylan MEMO, Silquest A-174NT), Vinyltri(m)ethoxysilan (Dynasylan VTMO bzw. VTEO, Silquest A-151 bzw. A-171), 3-Mercaptopropyltrimethoxysilan (Dynasylan MTMO; Silquest A-189), 3-Glycidoxypropyltrimethoxysilan (Dynasylan GLYMO, Silquest A-187), Tris[3-(trimethoxysilyl)propyl]isocyanurat (Silquest Y-11597), Bis[3-(triethoxysilyl)propyl)]tetrasulfid (Silquest A-1289), Bis[3-(triethoxysilyl)propyldisulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35, GENIOSIL GF40), Methacryloxymethyltri(m)ethoxysilan (GENIOSIL XL 33, XL 36), (Methacryloxymethyl)(m)ethyldimethoxysilan (GENIOSIL XL 32, XL 34), (Isocyanatomethyl)methyldimethoxysilan, (Isocyanatomethyl)trimethoxysilan, 3-(Triethoxysilyl)propylbernsteinsäureanhydrid (GENIOSIL GF 20), (Methacryloxymethyl)methyldiethoxysilan, 2-Acryloxyethylmethyldimethoxysilan, 2-Methacryloxyethyltrimethoxysilan, 3-Acryloxypropylmethyldimethoxysilan, 2-Acryloxyethyltrimethoxysilan, 2-Methacryloxyethyltriethoxysilan, 3-Acryloxypropyltrimethoxysilan, 3-Acryloxypropyltripropoxysilan, 3-Methacryloxypropyltriethoxysilan, 3-Methacryloxypropyltriacetoxysilan, 3- Methacryloxypropylmethyldimethoxysilan, Vinyltrichlorsilan, Vinyltrimethoxysilan (GENIOSIL XL 10), Vinyltris(2-methoxyethoxy)silan (GENIOSIL GF 58), Vinyltriacetoxysilan sowie aminofunktionelleSilane aus der Gruppe aus 3-Aminopropyltrimethoxysilan (Dynasylan AMMO; Silquest A-1110), 3-Aminopropyltriethoxysilan (Dynasylan AMEO), [3-(2-Aminoethyl)aminopropyl]trimethoxysilan (Dynasylan DAMO, Silquest A-1120), [3-(2-Aminoethyl)-aminopropyl]triethoxysilan, triaminofunktionelles Trimethoxysilan (Silquest A-1130), Bis-(gamma-trimethoxysilylpropyl)amin (Silquest A-1170), N-Ethyl-gamma-aminoisobutyltrimethoxysilan (Silquest A-Link 15), N-Phenyl-gamma-aminopropyltrimethoxysilan (Silquest Y-9669), 4-Amino-3,3-dimethylbutyltrimethoxysilan (Silquest A-1637), N-Cyclohexylaminomethylmethyldiethoxysilan (GENIOSIL XL 924), N-Cyclohexylaminomethyltriethoxysilan (GENIOSIL XL 926), N-Phenylaminomethyltrimethoxysilan (GENIOSIL XL 973) oder Mischungen davon ausgewählt werden.

Vorzugsweise werden als weitere Silane aminofunktionelle Silane aus der Gruppe bestehend aus 3-Aminopropyltrimethoxysilan (Dynasylan AMMO; Silquest A-1110), 3-Aminopropyltriethoxysilan (Dynasylan AMEO), [3-(2-Aminoethyl)-aminopropyl]trimethoxysilan (Dynasylan DAMO, Silquest A-1120), [3-(2-Aminoethyl)-aminopropyl]triethoxysilan, triaminofunktionelles Trimethoxysilan (Silquest A-1130), Bis-(gamma-trimethoxysilylpropyl)amin (Silquest A-1170), N-Ethyl-gamma-aminoisobutyltrimethoxysilan (Silquest A-Link 15), N-Phenyl-gamma-aminopropyltrimethoxysilan (Silquest Y-9669), 4-Amino-3,3-dimethylbutyltrimethoxysilan (Silquest A-1637), N-Cyclohexylaminomethylmethyldiethoxysilan (GENIOSIL XL 924), N-Cyclohexylaminomethyltriethoxysilan (GENIOSIL XL 926), N-Phenylaminomethyltrimethoxysilan (GENIOSIL XL 973) oder deren Mischungen verwendet.

Umfassen die erfindungsgemäßen Perlglanzpigmente neben einem Polysiloxan gemäß Formel (I) weitere Silane, so liegt deren Gesamtgehalt, bezogen auf das Gesamtgewicht des Perlglanzpigments, vorzugsweise bei $\leq 10$ Gew.-%. Das Verhältnis zwischen Polysiloxan gemäß Formel (I) und einem weiteren Silan bzw. Silangemisch liegt hierbei bevorzugt bei Polysiloxan 1 : Silan 2, besonders bevorzugt Polysiloxan 1 : Silan 1 und ganz besonders bevorzugt Polysiloxan 2 : Silan 1.

Die erfindungsgemäßen Perlglanzpigmente mit einer mit Polysiloxan gemäß Formel (I) modifizierten äußersten Metalloxid-, Metallhydroxid- und/oder Metalloxidhydratbeschichtung mit vorzugsweise geringer Schichtdicke sind kostengünstig herstellbar.

Bei dem erfindungsgemäßen Verfahren wird die Oberfläche der äußersten Metalloxid-, Metallhydroxid- und/oder Metalloxidhydratschicht mit einem Polysiloxan der Formel (II), vorzugsweise unter hydrolytischen Bedingungen, umgesetzt, wobei Z für eine hydrolysierbare Gruppe steht und $R^7$ und $R^8$ optional jeweils für eine hydrolysierbare Gruppe stehen können.

Das auf der Pigmentoberfläche der Perlglanzpigmente aufgebrachte Polysiloxan gemäß Formel (I) kann auf unterschiedliche Weise aufgebracht werden. Dabei wird vorzugsweise ein Polysiloxan der Formel (II) verwendet, wobei Z für eine hydrolysierbare Gruppe steht und $R^7$ und $R^8$ optional jeweils für eine hydrolysierbare Gruppe stehen können.

Die hydrolysierbare Gruppe Z steht vorzugsweise für Halogen, beispielsweise für F, Cl, Br und/oder I, und/oder $OR^9$ und/oder $O(C=O)R^9$, wobei $R^9$ für einen gesättigten, geradkettigen oder verzweigten Alkylrest mit 1 bis 6 Kohlenstoffatomen steht, wobei der Alkylrest O enthalten kann.

Äußerst bevorzugt steht $OR^9$ für Alkoxyreste, insbesondere Methoxy, Ethoxy, n-Propoxy, Isopropoxy, n-Butoxy, sec-Butoxy oder Isobutoxy. Als sehr geeignet haben sich Methoxy und Ethoxy erwiesen.

Weiterhin ist bevorzugt, dass $O(C=O)R^9$ für einen Fettsäurerest mit 1 bis 6 Kohlenstoffatomen, steht, insbesondere für Acetat, Propionat, Butyrat.

Die vorgenannten Alkoxyreste, Fettsäurereste oder die Halogen-Gruppe lassen sich leicht hydrolysieren, wodurch die Gruppe(n) Z sowie optional $R^7$ und/oder $R^8$ in Formel (II) durch Hydroxyl ersetzt werden, die sodann unter Kondensation, wie oben beschrieben, an die äußerste Metalloxid-, Metallhydroxid- und/oder Metalloxidhydratbeschichtung, vorzugsweise unter Ausbildung wenigstens einer Metall-O-Si-Bindung kovalent, binden können, wobei Metall für das oder ein Metall der äußersten Metalloxid-, Metallhydroxid- und/oder Metalloxidhydratbeschichtung steht.

Beispielsweise wird ein Polysiloxan gemäß Formel (II) in einem handelsüblichen Lösemittel gelöst, gegebenenfalls auch unter hydrolytischen Bedingungen, beispielsweise in Wasser in Gegenwart von saurem oder basischem Katalysator, und nachfolgend auf das metalloxid-, metallhydroxid- und/oder metalloxidhydratbeschichtete plättchenförmige nichtmetallische Substrat aufgebracht und aufgetrocknet. Alternativ kann die Beschichtung mit dem Polysiloxan gemäß Formel (II) unmittelbar nach der Belegung des plättchenförmigen, nichtmetallischen Substrates mit wenigstens einer Metalloxid-, Metallhydroxid- und/oder Metalloxidhydratschicht in einem Eintopfverfahren erfolgen.

Es wurde überraschenderweise festgestellt, dass das Polysiloxan gemäß Formel (I) äußerst zuverlässig auf der Oberfläche der äußersten Metalloxid-, Metallhydroxid-und/oder Metalloxidhydratbeschichtung der erfindungsgemäßen Perlglanzpigmente haftet und auch gegenüber den bei der Pulverlackherstellung durch direkte Extrusion auf die Pigmente einwirkenden mechanischen Scherkräften stabil ist. Zur Herstellung von Pulverlacken werden im konventionellen Mischverfahren die, optional in einem Feststoffmischer vorgemischten, Lackrohstoffe in einen Extruder eingebracht und in der Schmelze bei 80 bis 140°C homogenisiert. Das aus dem Extruder ausgetragene, gekühlte und zerkleinerte Extrudat wird so lange einem intensiven Mahlprozess unterzogen, bis die gewünschte Teilchengröße vorliegt. Zu einer mechanischen Zerkleinerung der Pigmente kommt es frühestens im Mahlprozess, jedoch sind die dabei gegebenenfalls entstehenden Fragmente nach wie vor mit Metalloxid-, Metallhydroxid- und/oder Metalloxidhydratschicht und Polysiloxan gemäß Formel (I) belegt und tragen somit zum hochwertigen optischen Erscheinungsbild des applizierten Pulverlackes bei. Die erfindungsgemäßen Perlglanzpigmente und die mit diesen erfindungsgemäßen Perlglanzpigmenten pigmentierten Pulverlackanwendungen weisen gegenüber den mit handelsüblichen Perlglanzpigmenten pigmentierten Pulverlackanwendungen auch bessere funktionale Eigenschaften hinsichtlich Überlackierbarkeit, Abriebbeständigkeit, Helligkeit und Glanz auf.

Im Vergleich zu Perlglanzpigmenten mit identischem Substrat und identischer Beschichtung, jedoch ohne die Oberflächenmodifizierung gemäß Formel (I), können die erfindungsgemäßen Perlglanzpigmente zur Erzielung eines identischen oder vergleichbaren optischen Effekts in einer Pulverlackapplikation in deutlich niedrigerer Pigmentierungshöhe vorliegen. In Abhängigkeit vom jeweils eingesetzten Perlglanzpigment kann die Mindestpigmentierungshöhe der erfindungsgemäßen Perlglanzpigmente, bei der ein Betrachter in einer Pulverlackierung keinen Unterschied hinsichtlich Glanz, Helligkeit, Glitzereffekt oder Deckfähigkeit mehr erkennen kann, im Vergleich zu einem identischen, aber nicht oberflächenmodifizierten Perlglanzpigment, unterschiedlich sein, jedoch sind in aller Regel geringere Pigmentierungshöhen der oberflächenmodifizierten Perlglanzpigmente erforderlich. Dieser äußerst vorteilhafte Effekt ist insbesondere dann zu beobachten, wenn die erfindungsgemäßen Perlglanzpigmente im Dry blend-Verfahren mit einem Pulverlack gemischt werden. Da bei der Herstellung eines pigmentierten Pulverlacks im Dry blend-Verfahren die erfindungsgemäßen Perlglanzpigmente nur mit dem Pulverlack gemischt werden und im Unterschied zum Extrusionsverfahren keinem Mahlschritt unterzogen und somit nicht beschädigt werden, behalten sie die typischen Eigenschaften für Perlglanzpigmente bei. Eine geringere Pigmentierungshöhe birgt bei im Dry blend-Verfahren hergestellten Pulverlacken auch aus verfahrenstechnischen Gründen Vorteile. Zum einen neigen hochpigmentierte im Dry blend-Verfahren hergestellte Pulverlacke zur Separation durch unterschiedliche Aufladbarkeiten (Permittivität) bei der Applikation, was in einer uneinheitlichen Pulverlackierung, Anhaftungen am Prallteller einer Pulverlackpistole und somit zu Lackierfehlern führen kann. Bei einer Separation von Pulverlack und Pigment kann der Overspray nicht erneut eingesetzt werden, da es dann zu unerwünschten Farb- und/oder Effektveränderungen kommt. Auch hinsichtlich der Kosten ist eine geringere Pigmentierungshöhe sehr vorteilhaft.

Die erfindungsgemäßen Perlglanzpigmente finden bevorzugt in Pulverlacken mit einem Pigmentgehalt von 0,1 bis 12 Gew.-%, vorzugsweise von 0,2 bis 10 Gew.-%, besonders bevorzugt von 0,5 bis 8 Gew.-%, bezogen auf das Pulverlackgesamtgewicht, Verwendung, wobei der Pigmentgehalt unabhängig vom Herstellungsverfahren des Pulverlacks ist.

Um den optischen Effekt der erfindungsgemäßen Perlglanzpigmente objektiv zu beschreiben, wurden Mehrwinkelfarb- und Effektmessungen mit einem BYK-mac (Fa. Byk-Gardner) anhand von Pulverlackapplikationen auf Blechen durchgeführt. Der BYK-mac misst den Gesamtfarbeindruck unter verschiedenen Beobachtungswinkeln und Lichtverhältnissen. Die Mehrwinkelfarbmessung dient hierbei zur Erfassung und Beschreibung des Hell-/ Dunkelflops und/ oder Farbflops von mit Effektpigmenten versehenen Lacken. Relativ zum Ausfallwinkel des bei 45° eingestrahlten Lichts werden die Messgeometrien (-15 °), + 15°, 25°, 45°, 75°, 110° gemessen. Zur Simulation von Effektänderungen bei direkter und diffuser Beleuchtung werden gleichzeitig Glitzereffekt und Körnigkeit mit Hilfe einer hochauflösenden CCD-Kamera kontrolliert. Der Glitzereffekt, verursacht durch das Reflexionsvermögen der einzelnen Effektpigmente, wird nur bei direkter Sonneneinstrahlung wahrgenommen und verändert sich in Abhängigkeit des Beleuchtungswinkels. Aus diesem Grund beleuchtet der Byk-mac die Probe mit sehr hellen LEDs unter drei verschiedenen Winkeln (15°/ 45°/ 75°). Die CCD-Kamera nimmt dabei senkrecht zur Oberfläche jeweils ein Bild auf. Die Bilder werden mit Hilfe von Bildverarbeitungsalgorithmen analysiert, wobei das Histogramm der Helligkeitsstufen als Basis für die Berechnung der Glitzerparameter verwendet wird. Um eine bessere Differenzierung zu gewährleisten, kann der Glitzereffekt durch ein zweidimensionales System beschrieben werden, der Glitzerfläche S_a und der Glitzerintensität S_i, welche auch in einem eindimensionalen Wert, dem Glitzergrad S_G zusammengefasst werden können (Byk-Gardner, Katalog "Qualitätskontrolle für Lacke und Kunststoffe" 2011/2012, S. 97/ 98).

Die gemessene Glitzerfläche und Glitzerintensität wird durch die Orientierung der Pigmente beeinflusst. Ein weitgehend planparallel zum Untergrund ausgerichtetes Pigment weist bei einem Vergleich der in den Beleuchtungsgeometrien 15°, 45° und 75° erhaltenen Glitzermesswerte S_a, S_i und S_G die höchsten Messwerte bei einer Beleuchtungsgeometrie von 15° auf, da ein großer Teil der Pigmente das eingestrahlte Licht direkt reflektiert. Bei einer Beleuchtungsgeometrie von 45° wird das eingestrahlte Licht weitgehend direkt reflektiert und damit bei Beobachtung senkrecht zur Applikation als schwächerer Glitzereffekt wahrgenommen. Der bei dieser Beleuchtungsgeometrie beobachtete Glitzereffekt geht teilweise auf fehl-, d. h. nicht planparallel, orientierte Pigmente zurück, die das bei 45° eingestrahlte Licht in Richtung des Detektors ablenken können. Bei einer Beleuchtungsgeometrie von 75° wird senkrecht zur Applikation kein bzw. nur ein schwacher Glitzereffekt wahrgenommen. Dieser Effekt wird wiederum durch fehlgeordnete Pigmente bedingt.

Somit weist ein gut orientiertes Pigment den größten Glitzereffekt bei 15° auf, der minimale Glitzereffekt relativ zu der 15° Messung wird bei 75° beobachtet. Im Falle eines schlecht orientierten Pigments werden die Differenzen der bei 15°, 45° und 75° Beleuchtungsgeometrie beobachteten Messwerte kleiner, da durch die Fehlorientierung stets Licht in Richtung des Detektors reflektiert wird.

Maßgeblich für den optischen Eindruck ist der eindimensionale Glitzergrad S_G. Je höher der Zahlenwert von S_G, desto höher ist der auch vom Auge wahrnehmbare Glitzereffekt. In einer zweidimensionalen Darstellung kann der Glitzergrad S_G in die Komponenten Glitzerintensität S_i und Glitzerfläche S_a aufgeteilt werden. Da beide Komponenten einen maßgeblichen Einfluss auf den Glitzergrad S_G haben, kann es vorkommen, dass ein Pigment in den Messgeometrien 15°, 45° und 75° nahezu den gleichen Glitzergrad S_G aufweist, obwohl sich die Zahlenwerte von S_a und S_i in den betrachteten Winkeln deutlich erhöhen bzw. erniedrigen.

Dabei wird der Zahlenwert S_i hauptsächlich beeinflußt vom Aufbau des Pigments, d.h. vom nichtmetallischen plättchenförmigen Substrat und von darauf aufgebrachter(en) Metalloxid-, Metallhydroxid-, und/oder Metalloxidhydratschicht(en), sowie außerdem in geringem Maße von der Lage der Pigmente in der Pulverlackapplikation. In der Regel ist der S_i-Wert umso höher, je näher sich die erfindungsgemäßen Perlglanzpigmente mit identischem Aufbau, d. h. identischem nichtmetallischen plättchenförmigen Substrat und von darauf aufgebrachter(en) Metalloxid-, Metallhydroxid-, und/oder Metalloxidhydratschicht(en), an der Oberfläche der Pulverlackapplikation befinden.

Der Zahlenwert S_a hingegen wird beeinflußt von der die verfügbare Reflexionsfläche definierenden Teilchengröße der erfindungsgemäßen Perlglanzpigmente, sowie der planparallelen Ausrichtung der erfindungsgemäßen Perlglanzpigmente und ebenso von der Lage der Pigmente in der Pulverlackapplikation. In der Regel ist der S_a-Wert umso höher, je größer die erfindungsgemäßen Perlglanzpigmente sind, je planparalleler die erfindungsgemäßen Perlglanzpigmente in der Pulverlackapplikation ausgerichtet sind, und umso näher sich die erfindungsgemäßen Perlglanzpigmente an der Oberfläche der Pulverlackapplikation befinden.

Durch die Oberflächenmodifizierung der erfindungsgemäßen Perlglanzpigmente werden diese einerseits näher an der Oberfläche der Pulverlackapplikation positioniert, andererseits werden diese im Hinblick auf ihre Ausrichtung in der Pulverlackapplikation positiv beeinflußt, d. h. sie besitzen eine möglichst planparallele Ausrichtung.

Bei identischem Aufbau, d. h. identischem nichtmetallischen plättchenförmigen Substrat und von darauf aufgebrachter(en) Metalloxid-, Metallhydroxid- und/oder Metalloxidhydratschicht(en), und identischer Teilchengröße unterscheiden sich die S_i-Werte der erfindungsgemäßen Perlglanzpigmenten gegenüber nicht oberflächenmodifizierten Perlglanzpigmenten nur in geringem Maße. Damit wird der Glitzergrad S_G hauptsächlich dominiert von der Glitzerfläche S_a.

Mithin kann bei identischem Aufbau der Zahlenwert für die Glitzerfläche S_a auch als Maß für die Ergiebigkeit von Perlglanzpigmenten angesehen werden, d.h. je höher der Zahlenwert der Glitzerfläche S_a, desto stärker ausgeprägt ist der vom Betrachter wahrnehmbare Glitzereffekt in der Pulverlackapplikation.

Bei identischem Aufbau und identischer Teilchengröße, jedoch mit erfindungsgemäßer Oberflächenmodifizierung kann der gleiche wahrnehmbare Glitzereffekt mit signifikant geringerem Pigmentgehalt in der Pulverlackapplikation erreicht werden.

Weiterhin ist es möglich, bei identischem Aufbau, den gleichen wahrnehmbaren Glitzereffekt mit erfindungsgemäßen Perlglanzpigmenten kleinerer Teilchengröße in der Pulverlackapplikation zu erzielen, wie mit nicht oberflächenmodifizierten Perlglanzpigmenten größerer Teilchengröße.
Weiterhin wird, bei identischem Aufbau und identischer Teilchengröße, in der Regel mit erfindungsgemäßen Perlglanzpigmenten vom Betrachter ein stärker ausgeprägter Glitzereffekt in der Pulverlackapplikation wahrgenommen, als mit nicht oberflächenmodifizierten Perlglanzpigmenten. Dieser Effekt kann bei einem identisch oberflächenmodifizierten Metalleffektpigment ab einer bestimmten Pigmentierungshöhe nicht mehr beobachtet werden, da ab einer maximalen Deckfähigkeit der Metalleffektpigmente die Deckfähigkeit und auch der damit einhergehende Glitzereffekt in der Pulverlackapplikation nicht mehr zunehmen kann.

Als ein weiteres Maß für die Ergiebigkeit der erfindungsgemäßen Perlglanzpigmente kann die Helligkeit L* der Pulverlackapplikation herangezogen werden. Der L*-wert wird beeinflußt von der die verfügbare Reflexionsfläche definierenden Teilchengröße der erfindungsgemäßen Perlglanzpigmente, sowie der planparallelen Ausrichtung der erfindungsgemäßen Perlglanzpigmente und ebenso von der Lage der Pigmente in der Pulverlackapplikation. In der Regel ist der L*-Wert umso höher, je größer die erfindungsgemäßen Perlglanzpigmente sind, je planparalleler die erfindungsgemäßen Perlglanzpigmente in der Pulverlackapplikation ausgerichtet sind und umso näher sich die erfindungsgemäßen Perlglanzpigmente an der Oberfläche der Pulverlackapplikation befinden.

Der Erfindungsgegenstand betrifft auch die Verwendung der erfindungsgemäßen Perlglanzpigmente in Lacken, Druckfarben, kosmetischen Formulierungen oder Kunststoffen.

Die Erfindung betrifft insbesondere die Verwendung der erfindungsgemäßen Perlglanzpigmente in Pulverlacken, insbesondere in durch Dry blend-Verfahren hergestellten Pulverlacken.

Als Pulverlackkomponente sind besonders bevorzugt Polyester-Pulverlacke, Polyacrylat-Pulverlacke, Polyurethan-Pulverlacke, Epoxid-Pulverlacke oder Polyester-Epoxid-Pulverlacke.

Weiterhin finden die erfindungsgemäßen Pulverlacke, die die erfindungsgemäßen Perlglanzpigmente enthalten, Verwendung zur Lackierung von Substraten, welche Metall, Metallfolien, Kunststoff, Glas, Glasfaser, Verbundwerkstoffe, Keramik, Holz, Beton, Textilmaterial und Holzwerkstoffe, wie beispielsweise MDF-Platten oder andere zu dekorativen und/oder schützenden Zwecken geeignete Werkstoffe, enthalten.

Die Erfindung betrifft ferner auch ein lackiertes Substrat, das mit dem erfindungsgemäßen Pulverlack oder den erfindungsgemäßen Perlglanzpigmenten lackiert ist.

Die erfindungsgemäße Pulverlackapplikation kann mit einem einschichtigen oder mehrschichtigen Klarlack beschichtet werden.

Ein mit erfindungsgemäßen Perlglanzpigmenten pigmentierter, durch direkte Extrusion, Dry blend- oder Bonding-Verfahren kostengünstig herstellbarer Pulverlack ermöglicht abriebstabile, ein- und mehrschichtige Pulverlackapplikationen mit einer ausgezeichneten Optik, insbesondere hinsichtlich Glanz, Brillanz und Helligkeit, welche mit handelsüblichen Perlglanzpigmenten pigmentierten Pulverlackapplikationen bisher nicht realisiert werden konnten. Zudem weist ein derartiger erfindungsgemäßer Pulverlack eine bisher bei mit Perlglanzpigmenten pigmentierten Pulverlacken unerreichte Applizierstabilität auf, d. h. es erfolgt während des Applizierens keine die Oberflächenoptik der Pulverlackbeschichtung negativ beeinträchtigende Entmischung der Pulverlackbestandteile.

Ein weiterer Gegenstand der Erfindung ist ein Verfahren zur Herstellung eines Pulverlackes, welches folgende Schritte umfasst:

(a) Mischen, vorzugsweise Extrudieren, eines Perlglanzpigmentes nach einem der Ansprüche 1 bis 5 zusammen mit Bindemittel und optional weiteren Bestandteilen eines Pulverlacks,
(b) optional Vermahlen des in Schritt (a) erhaltenen Extrudats.

Die zur Pulverlackherstellung mittels Mischverfahren eingesetzten Rohstoffe werden einschließlich der erfindungsgemäßen Perlglanzpigmente, gegebenenfalls nach einer separaten Vormischung, in einem Extruder in der Schmelze zu einem homogenen Extrudat auf bekannte Weise verarbeitet. Das aus dem Extruder entnommene, gekühlte und zerkleinerte Extrudat wird üblicherweise auf herkömmliche Weise vermahlen.

Die besonders kostengünstig durch Mischverfahren herstellbaren und mit den erfindungsgemäßen Perlglanzpigmenten pigmentierten Pulverlacke können zudem weitere Komponenten wie Füllstoffe, Additive, Vernetzer, Pigmente und gegebenenfalls weitere Zusatzstoffe enthalten.

Ein weiterer Gegenstand der Erfindung ist ein Verfahren zur Herstellung eines Pulverlackes durch Mischen eines Perlglanzpigmentes nach einem der Ansprüche 1 bis 5 mit einem Pulverlack.

Ein weiterer Gegenstand der Erfindung ist ein Bonding-Verfahren zur Herstellung eines Pulverlackes, welches folgende Schritte umfasst:

(a) Mischen eines Perlglanzpigmentes nach einem der Ansprüche 1 bis 5 mit einem Bindemittel und optional weiteren Bestandteilen eines Pulverlackes,

(b) Erwärmen der in Schritt (a) erhaltenen Mischung bis zur Erweichungstemperatur des Bindemittel und optional weiteren Bestandteilen eines Pulverlackes unter Anhaftung von Perlglanzpigmenten und Bindemitteln sowie optional weiteren Bestandteilen eines Pulverlackes,

(c) Abkühlen der in Schritt (b) erhaltenen Mischung.

Die mit den erfindungsgemäßen Perlglanzpigmenten pigmentierten Pulverlacke sind besonders vorteilhaft in lösungsmittelfreien Anwendungen in Form von umweltfreundlichen Grundierungen oder Einschichtdecklacken in vielen Bereichen der metallverarbeitenden Industrie, insbesondere der Automobil- und Automobilzuliefererindustrie, mit einem nahezu vollständigen Nutzungsgrad einsetzbar.

Insbesondere ermöglicht der erfindungsgemäße Pulverlack eine Rückführung und Wiederverwendung des Oversprays, ohne dass es bei der Wiederverwendung des Oversprays als Pulverlack zu einer Beeinträchtigung der Optik des lackierten Gegenstandes kommt. Somit ermöglichen die erfindungsgemäßen Perlglanzpigmente bzw. der erfindungsgemäße Pulverlack eine bislang nicht erreichte Ausbeute bei der Pulverlackierung.

Das Polysiloxan gemäß Formel (II) kann durch folgendes allgemeines Reaktionsschema erhalten werden:

(1) Umsetzung von Alkyllithium $R^1Li$ (X) mit (trimerisiertem) Dialkylsilanol $R^2R^3Si(OH)_2$ (III) unter Erhalt des Lithiumsilanolats (IV):

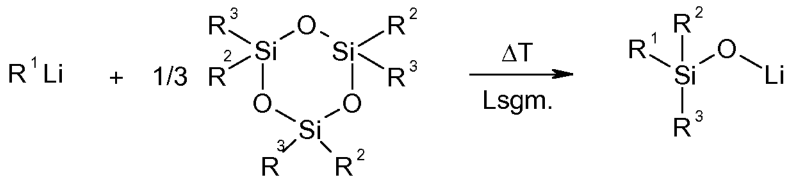


(X) (III) (IV)

(2) Umsetzung des Lithiumsilanolats (IV) mit (trimerisiertem) Dialkylsilanol $R^2R^3Si(OH)_2$ (III) unter Erhalt von makromerem Silanolat (V):

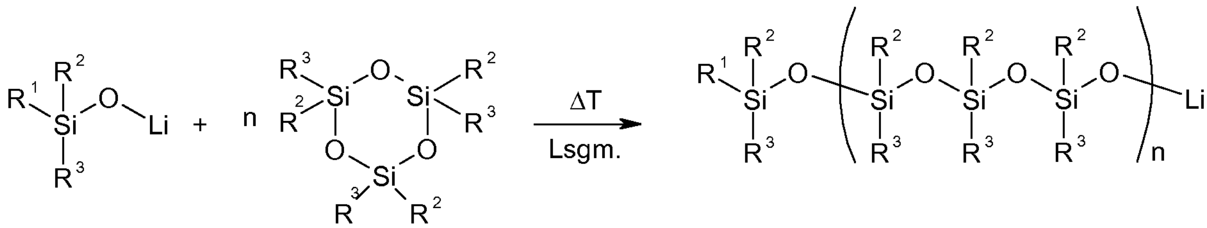


(IV) (III) (V)

(3) Umsetzung des makromeren Silanolats (V) mit Dialkylchlorsilan (VI) (Terminierungsreaktion) unter Erhalt von Polysiloxan (VIIa) mit endständigem Wasserstoff:

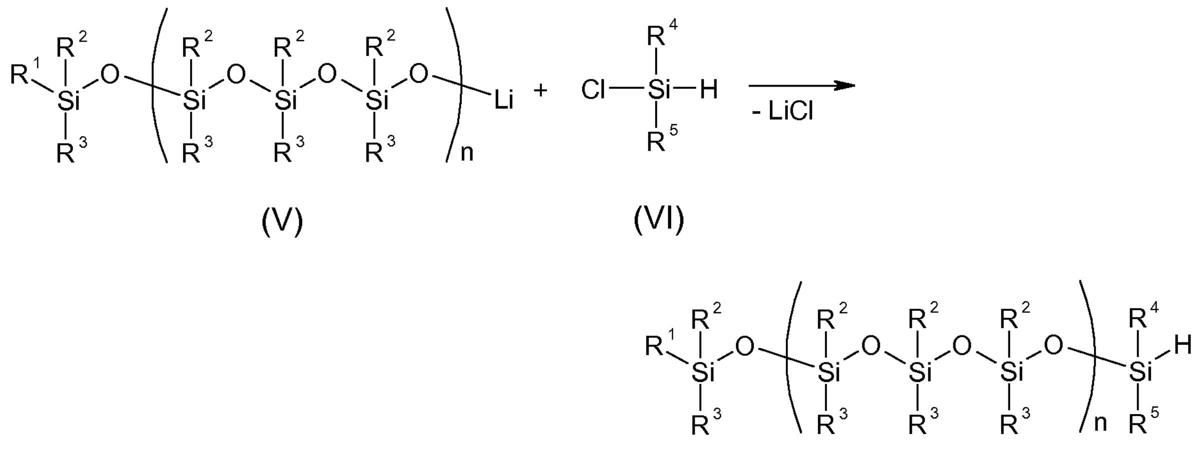


(V) (VI)

(VIIa)

(4) Hydrosilylierung des Polysiloxans (VIIa) bzw. in geänderter Darstellung (VIIb), in der x = n/3 ist, mit einem Alkoxyalkylsilan (Z=$OR^9$) oder Alkylhalogensilan (Z=Halogen, vorzugsweise Cl) (VIII), wobei die Verbindung (VIII) eine endständige ethylenische Doppelbindung aufweist, unter Erhalt des Polysiloxans (I):

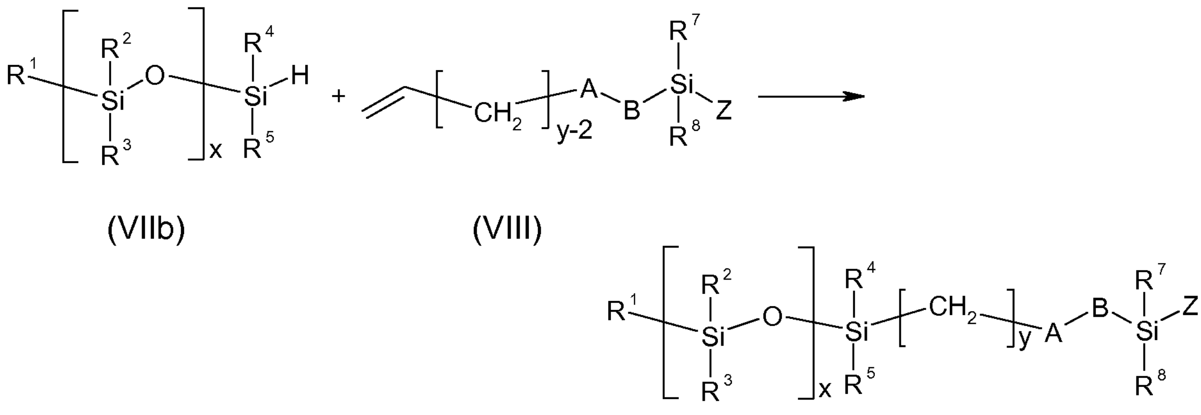

(VIIb) (VIII)

(II)

Als Alkyllithium können im Schritt (1) Alkyllithium oder Aryllithium $R^1Li$ verwendet werden, wobei $R^1$ die in Anspruch 1 angegebene Bedeutung hat. Beispielsweise können beispielsweise Methyllithium, Ethyllithium, sec.-Butyllithium, n-Propyllithium, Isopropyllithium, n-Butyllithium, sec-Butyllithium, tert.-Butyllithium, n-Pentyllithium, Neopentyllithium, Cyclopentyllithium, n-Hexyllithium, Cyclohexyllithium, n-Octyllithium, 2-Ethyllithium, n-Phenyllithium, Methylphenyllithium oder Ethylphenyllithium, etc. verwendet werden.

Als Dialkylsilanol können im Schritt (1) und Schritt (2) beispielsweise symmetrisch oder asymmetrisch substituierte Dialkylsilanole $R^2R^3Si(OH)_2$ verwendet werden, wobei $R^2$ und $R^3$ die in Anspruch 1 angegebene Bedeutung haben. Beispielsweise können als symmetrisch substituierte Dialkylsilanole Dimethylsilanol, Diethylsilanol, Di-n-propylsilanol, Di-isopropylsilanol, Di-n-butylsilanol, Di-sec-butylsilanol, Di-tert.-butylsilanol, etc. verwendet werden. Als asymmetrisch substituierte Dialkylsilanole können beispielsweise Ethylmethylsilanol, Methyl-n-propylsilanol, n-Butylmethylsilanol, Isobutylmethylsilanol, tert.-Butylmethylsilanol, Ethyl-n-propyllsilanol, n-Butyl-n-propylsilanol, n-Butylethylsilanol, Isobutyl-n-propylsilanol, tert.-Butyl-n-propylsilanol, etc. verwendet werden

Vorzugsweise werden symmetrisch substituierte Dialkylsilanole verwendet.

Im Schritt (3) kann symmetrisch oder asymmetrisch substituiertes Dialkylhalogensilan, vorzugsweise Dialkylchlorsilan $HSiR^4R^5Cl$, wobei $R^4$ und $R^5$ die in Anspruch 1 angegebene Bedeutung haben, verwendet werden. Als symmetrisch substituiertes Dialkylchlorsilan kann beispielsweise Dimethylchlorsilan, Diethylchlorsilan, Di-n-Propylchlorsilan, Di-isopropylchlorsilan, Di-n-butylchlorsilan, Di-sec-butylchlorsilan, Di-tert.-butylchlorsilan, Di-n-pentylchlorsilan, Dineopentylchlorsilan, Di-cyclopentylchlorsilan, Di-n-hexylchlorsilan, Dicyclohexylchlorsilan, Di-n-octylchlorsilan, etc. verwendet werden.

Als asymmetrisch substituiertes Dialkylchlorsilan kann beispielsweise Ethylmethylchlorsilan, Methyl-n-propylchlorsilan, n-Butyl-methylchlorsilan, sec-Butyl-methylchlorsilan, tert.-Butyl-methylchlorsilan, n-Butyl-ethylchlorsilan, sec-Butyl-ethylchlorsilan, tert.-Butyl-ethylchlorsilan, etc. verwendet werden.

Als Silan kann in Schritt (4) die Verbindung $(CH_2=CH)-(CH_2)_{y-2}-A-B-SiR^7R^8Z$ verwendet werden, wobei Z für eine hydrolysierbare Gruppe steht und $R^7$ und $R^8$ unabhängig voneinander für einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen und/oder für Halogen, vorzugsweise Cl, $OR^9$ und/oder $O(C=O)R^9$, wobei $R^9$ für einen gesättigten, geradkettigen oder verzweigten Alkylrest mit 1 bis 6 Kohlenstoffatomen steht, wobei der Alkylrest O enthalten kann, stehen können. A und B sowie x und y haben dabei jeweils die Bedeutung, wie in Anspruch 1 angegeben.

Die in Schritt (4) vorzugsweise als Alkoxyalkylsilan oder Alkylchlorsilan verwendeten Verbindungen weisen eine endständige ethylenische Gruppe auf, beispielsweise eine endständige Alkenylgruppe wie eine Vinylgruppe oder Allylgruppe oder einen 5-Hexenylrest, 7-Octenylrest oder eine 10-Undecenylrest. Beispielsweise können als Alkoxyalkylsilan oder Alkylchlorsilan Vinyltrichlorsilan, Vinyltri-tert.-butoxysilan, Vinyltriacetoxysilan, Vinylphenylmethylmethoxysilan, Vinylphenylmethylchlorsilan, Vinylphenyldiethoxysilan, Vinyldiphenylchlorsilan, Vinyldimethylethoxysilan, Vinyldimethylchlorsilan, 1-Vinyl-3-(chlormethyl)-1,1,3,3-tetramethyldisiloxan, Vinyl(chlormethyl)dimethylsilan, Vinyldimethylethoxysilan, Vinyltris(methoxypropoxy)silan, Vinyltris(2-methoxyethoxy)silan, Vinyltrimethoxysilan, Vinyltriisopropoxysilan, Vinyltriethoxysilan, Vinylphenyldichlorsilan, Vinyloctyldichlorsilan, Vinylmethyldimethoxysilan, Vinylmethyldiethoxysilan, Vinylmethyldichlorsilan, Vinylmethyldiacetoxysilan, Vinyldiphenylethoxysilan, 5-Hexenyltrichlorsilan, 5-Hexenyldimethylchlorsilan, Docosenyltriethoxysilan, Butenyltriethoxysilan, Butenylmethyldichlorsilan, Allyltrimethoxysilan, Allyltriethoxysilan, Allyltrichlorsilan, Allyloxyundecyltrimethoxysilan, Allylmethyldichlorsilan, Allyldimethylchlorsilan, Allyl(chlormethyl)dimethylsilan, Hexenyltriethoxysilan, Vinyldiphenylethoxysilan, 10-Undecenyltrimethoxysilan, 10-Undecenyltrichlorsilan, 10-undecenyldimethylchlorsilan, Styrylethyltrimethoxysilan, 7-Octenyltrimethoxysilan, 7-Octenyltrimethoxysilan, 7-Octenyldimethylchlorsilan, etc. verwendet werden.

Die Hydrosilylierungsreaktion in Schritt (4) wird auf übliche Art und Weise, vorzugsweise in Gegenwart eines Katalysators, beispielsweise Hexachloroplatin-IVsäure bei erhöhter Temperatur, beispielsweise in einem Bereich von 20 bis 200° C, vorzugsweise von 70 bis 150° C, durchgeführt.

Eine bevorzugte Ausführungsform des zu verwendenden Polysiloxans bei der Herstellung des erfindungsgemäßen Perlglanzpigmentes ist in Formel (IX) dargestellt,

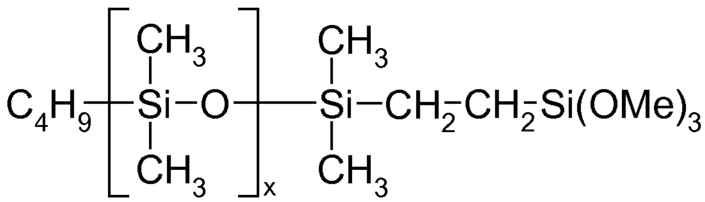

(IX)

wobei es sich bei dem Substituenten $C_4H_9$ vorzugsweise um n-Butyl handelt. Vorzugsweise enthält das Polysiloxan durchschnittlich 2 bis 200, weiter bevorzugt von 2,5 bis 150, noch weiter bevorzugt von 3 bis 100, noch weiter bevorzugt von 3,5 bis 50, Dimethylsiloxy-Einheiten. Nach Hydrolyse der drei Methoxygruppen zu drei OH-Gruppen wird die so hydrolysierte Verbindung (IX) über die Sauerstoffatome an die Oberfläche der Perlglanzpigmente, vorzugsweise kovalent, gebunden.

Bei einer weiteren Ausführungsform liegen die erfindungsgemäßen Perlglanzpigmente in Form eines Granulats vor. Hierbei enthält das Granulat mindestens ein Bindemittel und optional Additive oder Wachse.

In der Granulatform lässt sich das Perlglanzpigment leichter in die Anwendung formulieren. Die Staubbelastung, die beim Hantieren mit einem Perlglanzpigmentpulver zwangsweise auftritt, lässt sich vermeiden.

Das Granulat kann auch in üblicher Weise in eine feste Form zu Pellets, Tabletten, Würstchen, Briketts oder Kugeln verformt werden.

Die dem Granulat zugegebenen Bindemittel werden hinsichtlich auf die vorgesehene Anwendung hin ausgesucht. Besonders bevorzugt werden die Pigmentgranulate für Pulverlacke verwendet. Die Bindemittel entsprechen in diesem Fall bevorzugt jenen, die auch für Pulverlacke verwendet werden.

Der Gehalt des erfindungsgemäßen Perlglanzpigments an dem Granulat beträgt vorzugsweise 50 bis 95 Gew.-% und besonders bevorzugt 70 bis 90 Gew.-%, jeweils bezogen auf das gesamte Granulat.

Der Anteil an Bindemittel beträgt vorzugsweise 5 bis 30 Gew.-% und besonders bevorzugt 10 bis 20 Gew.-%, jeweils bezogen auf das gesamte Granulat.

Bei einer weiteren Ausführungsform umfasst die Erfindung Perlglanzpigmente mit einem plättchenförmigen nichtmetallischen Substrat, vorzugsweise bestehend aus synthetischen Glimmerplättchen oder Glasplättchen, wobei die Perlglanzpigmente mindestens eine Metalloxid-, Metallhydroxid- und/oder Metalloxidhydratschicht aufweisen, vorzugsweise umfassend eine dem Substrat zugewandte erste Schicht mit oder aus Titanoxid-, Titanhydroxid- und/oder Titanoxidhydrat und/oder mit oder aus Eisenoxid-, Eisenhydroxid-und/oder Eisenoxidhydrat sowie mit einer darauf aufgebrachten Schutzschicht von oder aus Metalloxid-, Metallhydroxid- und/oder Metalloxidhydraten, vorzugsweise der Elemente Silizium und/oder Cer, und die Oberfläche der Schutzschicht kovalent gebundenes Polysiloxan der Formel I aufweist.

Bei einer weiteren Ausführungsform umfasst die Erfindung Perlglanzpigmente mit einem plättchenförmigen nichtmetallischen Substrat, vorzugsweise bestehend aus synthetischen Glimmerplättchen oder Glasplättchen, wobei die Perlglanzpigmente mindestens eine Metalloxid-, Metallhydroxid- und/oder Metalloxidhydratschicht aufweisen, vorzugsweise umfassend eine dem Substrat zugewandte erste Schicht mit Titanoxid-, Titanhydroxid-und/oder Titanoxidhydrat und/oder Eisenoxid-, Eisenhydroxid- und/oder Eisenoxidhydrat sowie mit einer darauf aufgebrachten Schutzschicht von oder mit Metalloxid-, Metallhydroxid-und/oder Metalloxiden, vorzugsweise der Elemente Silizium und/oder Cer und die Oberfläche der Schutzschicht kovalent gebundenes Polysiloxan der Formel I sowie ein aminofunktionelles Silan aufweist.

Bei einer weiteren Ausführungsform umfasst die Erfindung Perlglanzpigmente mit einem plättchenförmigen nichtmetallischen Substrat, vorzugsweise bestehend aus synthetischen Glimmerplättchen oder Glasplättchen, wobei die Perlglanzpigmente mindestens eine Metalloxid-, Metallhydroxid- und/oder Metalloxidhydratschicht aufweisen, vorzugsweise umfassend eine dem Substrat zugewandte erste Schicht mit Titanoxid-, Titanhydroxid- und/oder Titanoxidhydrat und/oder Eisenoxid-, Eisenhydroxid- und/oder Eisenoxidhydrat sowie mit einer darauf aufgebrachten Metalloxid-, Metallhydroxid- und/oder Metalloxidhydratschicht, vorzugsweise der Elemente Silizium und/oder Cer, und die Oberfläche der letzteren Metalloxid-, Metallhydroxid- und/oder Metalloxidhydratschicht kovalent gebundenes Polysiloxan der Formel IX sowie optional ein organofunktionelles Silan aufweist.

Bei einer weiteren Ausführungsform umfasst die Erfindung Perlglanzpigmente mit einem plättchenförmigen nichtmetallischen Substrat, vorzugsweise bestehend aus synthetischen Glimmerplättchen oder Glasplättchen, wobei die Perlglanzpigmente mindestens eine Metalloxid-, Metallhydroxid- und/oder Metalloxidhydratschicht aufweisen, vorzugsweise umfassend eine dem Substrat zugewandte erste Schicht mit Titanoxid-, Titanhydroxid- und/oder Titanoxidhydrat und/oder Eisenoxid-, Eisenhydroxid- und/oder Eisenoxidhydrat sowie mit einer optional darauf aufgebrachten Metalloxid-, Metallhydroxid- und/oder Metalloxidhydratschicht, vorzugsweise der Elemente Silizium und/oder Cer, und die Oberfläche der letzteren Metalloxid-, Metallhydroxid- und/oder Metalloxidhydratschicht kovalent gebundenes Polysiloxan der Formel IX mit durchschnittlich 2 bis 200 Dimethylsiloxy-Einheiten sowie optional ein aminofunktionelles Silan aufweist.

Anhand der nachstehend aufgeführten Beispiele wird die Erfindung näher erläutert, ohne sie jedoch zu beschränken. Alle %-Angaben sind als Gew.-%-Angaben zu verstehen.

**I Herstellung des Oberflächenmodifizierungsmittels**

Beispiel 1 a

1. Stufe: Herstellung eines alpha-n-Butyl-omega-H-polydimethylsiloxans mit einem Molekulargewicht von ca. 1960 g/mol

1 mol n-Butyllithium wurde zu 8,3 mol Hexamethylcyclotrisiloxan in 1899 ml Cyclohexan (wasserfrei) unter Stickstoffatmosphäre in einem Dreihalskolben mit KPG-Rührer unter Rühren bei 28 bis 30°C über 30 Minuten zugetropft. Danach wurden über 15 Minuten 1664 ml THF mit einer Temperatur von 25° C zugetropft. Der Ansatz wurde leicht gekühlt, um die Temperatur bei 30°C zu halten. Die Temperatur wurde bei 30° C gehalten, bis das Hexamethylcyclotrisiloxan nahezu vollständig umgesetzt war. Der Umsetzungsgrad wurde über NMR bestimmt, bis der Anteil an Hexamethylcyclotrisiloxan ≤ 1 Gew.-% war. Die Umsetzung wurde sodann durch Zugabe von 1,16 mol Dimethylchlorsilan für 0,5 h bei 25° C terminiert, wobei die Reaktionstemperatur unter Kühlung bei maximal 30° C gehalten wurde. Während der Zugabe fiel Lithiumchlorid als weißer Festkörper aus. Das Reaktionsprodukt (makromeres alpha-n-Butyl-omega-H-polydimethylsiloxan) wurde durch Zugabe von 150 ml einer 10%igen wässrigen Natriumbicarbonatlösung neutralisiert. Nachfolgend wurde die wässrige Phase durch Phasentrennung und die Lösemittel mittels Vakuumdestillation bei 130° C und 50 mbar entfernt. Anschließend wurde das Produkt über einen Druckfilter filtriert.

2. Stufe: Herstellung des alpha-n-Butyl-omega-trimethoxysilyl-ethylpolydimethylsiloxans

Zu 0,5 Mol des neutralisierten Reaktionsproduktes (makromeres alpha-n-Butyl-omega-H-polydimethylsiloxan) wurden zunächst 0,7 g einer 6%igen Hexachloroplatin(IV)säurehydrat-Lösung in Isopropanol zugegeben und sodann

0,6 Mol Vinyltrimethoxysilan über 0,5 h bei einer Reaktionstemperatur von 80 bis maximal 120° C zugegeben. Die Umsetzung wurde mittels gasvolumetrischer Si-H Bestimmung verfolgt. Nach vollständiger Umsetzung wurde das überschüssige Vinyltrimethoxysilan im Reaktionsprodukt mittels Vakuumdestillation bei 130° C und 50 mbar entfernt.

Beispiel 1b

1. Stufe: Herstellung eines alpha-n-Hexyl-omega-H-polydimethylsiloxans mit einem Molekulargewicht von ca. 600 g/mol.

1 mol n-Hexyllithium wurde zu 2,5 mol Hexamethylcyclotrisiloxan in 680 ml Cyclohexan (wasserfrei) unter Stickstoffatmosphäre in einem Dreihalskolben mit KPG-Rührer unter Rühren bei 28 bis 30° C über 30 Minuten zugetropft. Danach wurden über 15 Minuten 595 ml THF mit einer Temperatur von 25° C zugetropft. Der Ansatz wurde leicht gekühlt, um die Temperatur bei 30°C zu halten. Die Temperatur wurde bei 30° C gehalten, bis das Hexamethylcyclotrisiloxan nahezu vollständig umgesetzt war. Der Umsetzungsgrad wurde über NMR bestimmt, bis der Anteil an Hexamethylcyclotrisiloxan $\leq$ 1 Gew.-% war. Die Umsetzung wurde sodann durch Zugabe von 1,16 mol Dimethylchlorsilan für 0,5 h bei 25° C terminiert, wobei die Reaktionstemperatur unter Kühlung bei maximal 30° C gehalten wurde. Während der Zugabe fiel Lithiumchlorid als weißer Festkörper aus. Das Reaktionsprodukt (makromeres alpha-n-Hexyl-omega-H-polydimethylsiloxan) wurde durch Zugabe von 150 ml einer 10%igen wässrigen Natriumbicarbonatlösung neutralisiert. Nachfolgend wurde die wässrige Phase durch Phasentrennung und die Lösemittel mittels Vakuumdestillation bei 130° C und 50 mbar entfernt. Anschließend wurde das Produkt über einen Druckfilter filtriert.

2. Stufe: Herstellung des alpha-n-Hexyl-omega-trimethoxysilyl-ethylpolydimethylsiloxans

Zu 0,5 Mol des neutralisierten Reaktionsproduktes (makromeres alpha-n-Hexyl-omega-H-polydimethylsiloxan) wurden zunächst 0,7g einer 6%igen Hexachloroplatin(IV)säurehydrat-Lösung in Isopropanol zugegeben und sodann 0,6 Mol Vinyltrimethoxysilan über 0,5 h bei einer Reaktionstemperatur von 80 bis maximal 120° C zugegeben. Die Umsetzung wurde mittels gasvolumetrischer Si-H Bestimmung verfolgt. Nach vollständiger Umsetzung wurde das überschüssige Vinyltrimethoxysilan im Reaktionsprodukt mittels Vakuumdestillation bei 130° C und 50 mbar entfernt.

Beispiel 1c

1. Stufe: Herstellung eines alpha-n-Butyl-omega-H-polydimethylsiloxans mit einem Molekulargewicht von ca. 1100 g/mol.

1 mol n-Butyllithium wurde zu 4,8 mol Hexamethylcyclotrisiloxan in 1165 ml Cyclohexan (wasserfrei) unter Stickstoffatmosphäre in einem Dreihalskolben mit KPG-Rührer unter Rühren bei 28 bis 30° C über 30 Minuten zugetropft. Danach wurden über 15 Minuten 1020 ml THF mit einer Temperatur von 25° C zugetropft. Der Ansatz wurde leicht gekühlt, um die Temperatur bei 30° C zu halten. Die Temperatur wurde bei 30° C gehalten, bis das Hexamethylcyclotrisiloxan nahezu vollständig umgesetzt war. Der Umsetzungsgrad wurde über NMR bestimmt, bis der Anteil an Hexamethylcyclotrisiloxan $\leq$ 1 Gew.-% war. Die Umsetzung wurde sodann durch Zugabe von 1,16 mol Dimethylchlorsilan für 0,5 h bei 25° C terminiert, wobei die Reaktionstemperatur unter Kühlung bei maximal 30° C gehalten wurde. Während der Zugabe fiel Lithiumchlorid als weißer Festkörper aus. Das Reaktionsprodukt (makromeres alpha-n-Butyl-omega-H-polydimethylsiloxan) wurde durch Zugabe von 150 ml einer 10%igen wässrigen Natriumbicarbonatlösung neutralisiert. Nachfolgend wurde die wässrige Phase durch Phasentrennung und die Lösemittel mittels Vakuumdestillation bei 130° C und 50 mbar entfernt. Anschließend wurde das Produkt über einen Druckfilter filtriert.

2. Stufe: Herstellung des alpha-n-Butyl-omega-trimethoxysilyl-ethylpolydimethylsiloxans

Zu 0,5 Mol des neutralisierten Reaktionsproduktes (makromeres alpha-n-Butyl-omega-H-polydimethylsiloxan) wurden zunächst 0,5 g einer 6%igen Hexachloroplatin(IV)säure Hydrat Lösung in Isopropanol zugegeben und sodann 0,6 Mol Vinyltrimethoxysilan über 0,5 h bei einer Reaktionstemperatur von 80 bis maximal 120° C zugegeben. Die Umsetzung wurde mittels gasvolumetrischer Si-H Bestimmung verfolgt. Nach vollständiger Umsetzung wurde das überschüssige Vinyltrimethoxysilan im Reaktionsprodukt mittels Vakuumdestillation bei 130° C und 50 mbar entfernt.

**II Herstellung der erfindungsgemäßen Perlglanzpigmente**

Beispiel 2

100 g kommerziell erhältliches silbernes Perlglanzpigment auf Basis von synthetischen Glimmerplättchen, Symic C001 der Fa. Eckart GmbH, wurde in 850 ml VE-Wasser suspendiert und unter turbulentem Rühren auf 85° C

erhitzt. Der pH-Wert wurde mit verdünnter Salzsäure auf 4,2 gesenkt. Dann wurde eine Lösung, bestehend aus 0,93 g $Ce(NO_3)_3$ x 6 $H_2O$ gelöst in 40 ml VE-Wasser, zudosiert. Gleichzeitig wurde durch Zutropfen einer 10% igen NaOH-Lösung der pH-Wert konstant gehalten. Nachdem die Lösung vollständig zugegeben wurde, wurde 1h nachgerührt. Die Suspension wurde dann abfiltriert und der Filterkuchen mit VE-Wasser nachgewaschen. Der Filterkuchen wurde bei 95°C unter Vakuum getrocknet. Im Anschluss an die Trocknung wurde das Pigment in einen Laborkneter der Fa. IKA vorgelegt. 0,5 g des Oberflächenmodifizierungsmittels aus Beispiel 1a wurde in 20g Ethylacetat gelöst und mit dem Pigment im Kneter 20 Minuten gemischt. Anschließend wurde die Mischung bei 100° C getrocknet.
Das oberflächenmodifizierte Perlglanzpigment diente als Ausgangsmaterial für die anschließenden Pulverlackapplikationen.

Beispiel 3

100 g kommerziell erhältliches silbernes Perlglanzpigment auf Basis von synthetischen Glimmerplättchen, Symic C001 der Fa. Eckart GmbH wurde in 300 ml Isopropanol suspendiert und auf Siedetemperatur gebracht. Unter Rühren gab man zunächst 2,0 g $H_2O$ und anschließend innerhalb einer Stunde eine Lösung aus 0,93 g $Ce(NO_3)_3$ in 100 g Isopropanol hinzu. Anschließend wurde 1h nachgerührt und dann eine Lösung aus 0,5 g des Oberflächenmodifizierungsmittels aus Beispiel 1 b in 20 g Isopropanol hinzugegeben. Man ließ die Suspension noch 6 h lang weiter reagieren, ehe das Gemisch über einen Büchner Trichter abfiltriert wurde. Der Pigmentfilterkuchen wurde in einem Labortrockner bei 120° C getrocknet.
Das oberflächenmodifizierte Perlglanzpigment diente als Ausgangsmaterial für die anschließenden Pulverlackapplikationen.

Beispiel 4

100 g kommerziell erhältliches goldfarbenes Perlglanzpigment auf Basis von Glasplättchen, Luxan D393 der Fa. Eckart GmbH, wurde in 400 ml Isopropanol suspendiert und auf Siedetemperatur gebracht. Unter Rühren gab man zunächst 2,0 g $H_2O$ hinzu. Anschließend wurde eine Lösung von 0,45 g Ethylendiamin in 3,0 g $H_2O$ hinzugegeben. Danach leitete man über einen Zeitraum von 2h 10,4g Tetraethoxysilan und 22 g Isopropanol mit einer Dosierpumpe der Fa. Ismatec kontinuierlich ein. Anschließend ließ man die Suspension noch 6 h lang weiter reagieren, ehe eine Lösung aus 0,5 g des Oberflächenmodifizierungsmittels aus Beispiel 1a in 20 g Isopropanol hinzugegeben wurde. Das Gemisch wurde anschließend über einen Büchner Trichter abfiltriert. Der Pigmentfilterkuchen wurde in einem Labortrockner bei 120° C ausgetrocknet. Das oberflächenmodifizierte Perlglanzpigment diente als Ausgangsmaterial für die anschließenden Pulverlackapplikationen.

Beispiel 5

100 g kommerziell erhältliches goldfarbenes Perlglanzpigment auf Basis von Glasplättchen, Luxan D393 der Fa. Eckart GmbH, wurden in 850 ml VE-Wasser suspendiert und unter turbulentem Rühren auf 85°C erhitzt. Der pH-Wert wurde mit verdünnter Salzsäure auf 4,2 gesenkt. Dann wurde eine Lösung bestehend aus 0,93 g $Ce(NO_3)_3$ x 6 $H_2O$ gelöst in 40 ml VE-Wasser zudosiert. Gleichzeitig wurde durch Zutropfen einer 10%igen NaOH-Lösung der pH-Wert konstant gehalten. Nachdem die Lösung vollständig zugegeben wurde, wurde 1h nachgerührt. Die Suspension wurde dann abfiltriert und der Filterkuchen mit VE-Wasser nachgewaschen. Der Filterkuchen wurde bei 95° C unter Vakuum getrocknet. Im Anschluss an die Trocknung wurde das Pigment in einem Zentrifugalmischer der Fa. Hausschild Engineering vorgelegt. 0,75 g des Oberflächenmodifizierungsmittels aus Beispiel 1c und 0,25 g Dynasilan DAMO wurden in 50 g Ethylacetat gelöst und anschließend 30 Minuten mit dem Pigment vermischt. Pigmentanhaftungen, welche am Rand des Mischers hängen geblieben waren, wurden mithilfe eines Spatels abgekratzt und der Mischvorgang wurde nochmals für 30 Minuten fortgesetzt. Insgesamt wurde dieser Vorgang dreimal wiederholt.
Der so erhaltene Pigmentfilterkuchen wurde in einem Labortrockner bei 120° C getrocknet.
Das oberflächenmodifizierte Perlglanzpigment diente als Ausgangsmaterial für die anschließenden Pulverlackapplikationen.

Beispiel 6

100 g kommerziell erhältliches silbernes Perlglanzpigment auf Basis von synthetischen Glimmerplättchen, Symic E001 der Fa. Eckart GmbH, wurde in 850 ml VE-Wasser suspendiert und unter turbulentem Rühren auf 85°C erhitzt. Der pH-Wert wurde mit verdünnter Salzsäure auf 4,2 gesenkt. Dann wurde eine Lösung bestehend aus 0,93 g $Ce(NO_3)_3$ x 6 $H_2O$ gelöst in 40 ml VE-Wasser zudosiert. Gleichzeitig wurde durch Zutropfen einer 10% igen NaOH-Lösung der pH-Wert konstant gehalten. Nachdem die Lösung vollständig zugegeben wurde, wurde 1h nachgerührt. Die

Suspension wurde dann abfiltriert und der Filterkuchen mit VE-Wasser nachgewaschen. Der Filterkuchen wurde bei 95°C unter Vakuum getrocknet.
Im Anschluss an die Trocknung wurde das Pigment in einem Laborkneter der Fa. IKA vorgelegt. 0,5 g des Oberflächenmodifizierungsmittels aus Beispiel 1c wurde in 20 g Ethylacetat gelöst und anschließend mit dem Pigment im Kneter vermischt.
Nachdem 20 Minuten gemischt wurde, wurde das Gemenge bei 100° C getrocknet.
Das oberflächenmodifizierte Perlglanzpigment diente als Ausgangsmaterial für die anschließenden Pulverlackapplikationen.

Beispiel 7 (Referenzbeispiel)

100 g kommerziell erhältliches goldfarbenes Perlglanzpigment auf Basis von Glasplättchen, Luxan D393 der Fa. Eckart GmbH, wurden in einem Laborkneter der Fa. IKA vorgelegt. 0,5 g des Oberflächenmodifizierungsmittels aus Beispiel 1c wurde in 40 g Ethylacetat gelöst und anschließend mit dem Pigment im Kneter vermischt.
Nachdem 20 Minuten gemischt wurde, wurde das Gemenge bei 100° C ausgetrocknet.
Das oberflächenmodifizierte Perlglanzpigment diente als Ausgangsmaterial für die anschließenden Pulverlackapplikationen.

Vergleichsbeispiel 1

Silbernes Perlglanzpigment auf Basis von synthetischen Glimmerplättchen Symic C001 der Fa. Eckart GmbH.

Vergleichsbeispiel 2

Silbernes Perlglanzpigment auf Basis von synthetischen Glimmerplättchen Symic E001 der Fa. Eckart GmbH.

Vergleichsbeispiel 4

Goldfarbenes Perlglanzpigment auf Basis von Glasplättchen Luxan D393 der Fa. Eckart GmbH.

Vergleichsbeispiel 5

100 g kommerziell erhältliches goldfarbenes Perlglanzpigment auf Basis von Glasplättchen, Luxan D393 der Fa. Eckart GmbH wurden in 150 g Ethanol dispergiert. Hierzu wurden 1,5 g Oktanphosphonsäure, gelöst in 20 g Ethanol, gegeben und 30 Minuten nachgerührt. Nach einer Stunde Rühren bei Raumtemperatur wurde das Pigment abfiltriert und im Vakuumtrockenschrank bei 40° C 6 Stunden getrocknet.

Vergleichsbeispiel 6

150 g silbernes Perlglanzpigment auf Basis von synthetischen Glimmerplättchen Symic E001 der Fa. Eckart GmbH wurden in einem Laborkneter der Fa. IKA vorgelegt. 3,1g Cyracure 6110 der Fa. Dow Corning wurde in 60 g Ethanol mit einem $H_2O$-Gehalt von 25 % gelöst und anschließend mit dem Pigment im Kneter vermischt. Nachdem 20 Minuten gemischt wurde, wurde das Gemenge bei 120° C getrocknet.
Das resultierende Pigment diente als Ausgangsmaterial für die anschließenden Pulverlackapplikationen.

Vergleichsbeispiel 7

Silbernes Perlglanzpigment auf Basis von natürlichen Glimmerplättchen Phoenix XT1001 der Fa. Eckart GmbH.

Vergleichsbeispiel 8

Silbernes Perlglanzpigment auf Basis von natürlichen Glimmerplättchen Phoenix XT5001 der Fa. Eckart GmbH.

Vergleichsbeispiel 9

Handelsübliches spezial Aluminiumeffektpigment für Pulverlacke mit leafing Eigenschaften der Firma Karl-Schlenck AG; Powdal 130 mit einer mittleren Teilchengröße von ca. 20 $\mu$m

Vergleichsbeispiel 10

Handelsübliches spezial Aluminiumeffektpigment für Pulverlacke, Silika beschichtet mit non leafing Eigenschaften der Firma Karl-Schlenck AG; Powdal 2650 mit einer mittleren Teilchengröße von ca. 20 µm.

## III Charakterisierung der erfindungsgemäßen Perlglanzpigmente und Pigmente der Vergleichsbeispiele

### IIIa Teilchengrößenmessung

Die Größenverteilungskurve der erfindungsgemäßen Perlglanzpigmente sowie der Pigmente der Vergleichsbeispiele wurde mit einem Gerät der Fa. Malvern (Gerät: MALVERN Mastersizer 2000) gemäß Herstellerangaben bestimmt. Hierzu wurden ca. 0,1 g des entsprechenden Pigmentes als wässrige Suspension, ohne Zusatz von Dispergierhilfsmitteln, unter ständigem Rühren mittels einer Pasteurpipette in die Probenvorbereitungszelle des Messgerätes gegeben und mehrmals vermessen. Aus den einzelnen Messergebnissen wurden die Mittelwerte gebildet. Die Auswertung der Streulichtsignale erfolgte dabei nach der Fraunhofer Methode.

Unter der mittleren Größe $D_{50}$ wird im Rahmen dieser Erfindung der $D_{50}$-Wert der Summenhäufigkeitsverteilung der volumengemittelten Größenverteilungsfunktion, wie sie durch Laserbeugungsmethoden erhalten werden, verstanden. Der $D_{50}$-Wert gibt an, dass 50 % der Pigmente einen Durchmesser aufweisen, der gleich oder kleiner als der angegebene Wert, beispielsweise 20 µm, ist. Entsprechend gibt der $D_{90}$-Wert an, dass 90 % der Pigmente einen Durchmesser aufweisen, der gleich oder kleiner als der jeweilige Wert ist. Weiterhin gibt der $D_{10}$-Wert an, dass 10 % der Pigmente einen Durchmesser aufweisen, der gleich oder kleiner als der jeweilige Werte ist.

### IIIb Bestimmung der mittleren Dicke des plättchenförmigen nichtmetallischen Substrats über Querschliffe; Bestimmung der mittleren Dicke der erfindungsgemäßen Perlglanzpigmente und Pigmente der Vergleichsbeispiele über Spreitwert

Zur Bestimmung der mittleren Dicke der nichtmetallischen plättchenförmigen Substrate wurden die Substrate oder die Perlglanzigmente 10 Gew.-%ig in einem 2K Klarlack Autoclear Plus HS, Fa. Sikkens, mit einem Hülsenpinsel eingearbeitet und mit Hilfe einer Spiralrakel (26 µm Nassfilmdicke) auf eine Folie appliziert und getrocknet. Nach 24 h Trocknung wurden von diesen Rakelabzügen Querschliffe angefertigt, die rasterelektronenmikroskopisch vermessen wurden. Hierbei wurden mindestens 100 Substrat- oder Pigmentteilchen vermessen, um eine aussagefähige Statistik zu erhalten.

Die mittlere Dicke der erfindungsgemäßen Perlglanzpigmente und Pigmente der Vergleichsbeispiele wurde über die Spreitwertmethode bestimmt. Hierzu wurden die erfindungsgemäßen Perlglanzpigmente in einem leicht flüchtigen organischen Lösemittel auf eine Wasseroberfläche in einer Wanne aufgegeben. Die Pigmente spreiten auf der Wasseroberfläche und bilden einen Film. Durch Rühren mit einem Glasstab werden sie zu einem gleichmäßigen lückenlosen Film verteilt. Anschließend wird der Film durch zwei Lineale zusammengedrückt, bis er erste Falten aufweist. Dann wird der Film wieder soweit entspannt, bis die Falten verschwinden. Die vom Film bedeckte Fläche wird ausgemessen und anhand der Einwaage des Pigmentes als Spreitwert in $cm^2/g$ (oder auch in $m^2/g$) angegeben.
Bei dieser Methode wird unterstellt, dass sich die Pigmente zumindest im Mittel im Film einzeln nebeneinander anordnen und mithin in einer einzigen "Monolage" Pigmente vorliegen.
Anhand dieses Spreitwertes errechnet sich die mittlere Dicke h in nm der Pigmente nach der folgenden Formel:

$$h = \frac{10^7 (nm/cm)}{\rho(g/cm^3) * Spreitwert(cm^2/g)}$$

wobei p die physikalische Reindichte der erfindungsgemäßen Pigmente ist.
Die Bestimmung der Dichte erfolgte hierbei über ein Heliumpyknometer (Multipycnometer, Fa. Quantachrome). Die Messung ist eignet sich für die genaue Dichtebestimmung von Pulvern sowie von porösen und unregelmäßig geformten Feststoffen. Hierbei wird der Druckverlust eines Helium-Referenzvolumens ermittelt und daraus auf das Volumen der Probe geschlossen. Dieses wird in Bezug zum jeweiligen Gewicht der Einwaage gesetzt.

Das Aspektverhältnis ist definiert als Verhältnis von mittlerer Teilchengröße $D_{50}$ zu mittlerer Dicke h.

Tabelle 1

| Beispiel | Dichte [$g/cm^3$] | Spreitwert [$cm^2/g$] | Mittlere Dicke Pigment h [nm] | Aspektverhältnis |
|---|---|---|---|---|
| Beispiel 2 | 3,15 | 10500 | 302 | 68 |

(fortgesetzt)

| Beispiel | Dichte [g/cm$^3$] | Spreitwert [cm$^2$/g] | Mittlere Dicke Pigment h [nm] | Aspektverhältnis |
|---|---|---|---|---|
| Beispiel 4 | 2,5 | 1700 | 2353 | 21 |
| Beispiel 6 | 2,9 | 7000 | 493 | 115 |

**IIIc Bestimmung des Metalloxid-, Metallhydroxid- und/oder Metalloxidhydratgehalts**

Die Metalloxid-, Metallhydroxid- und/oder Metalloxidhydratgehalte der optional vorhandenen Schutzschicht der Perlglanzpigmente wurden mittels Röntgenfluoreszenzanalyse (RFA) bestimmt. Hierzu wurde das Perlglanzpigment in eine Lithiumtetraboratglastablette eingearbeitet, in Festprobenmessbechern fixiert und daraus vermessen. Als Messgerät diente das Gerät Advantix ARL, Fa. Thermo Scientific.

Tabelle 2

| Beispiel/Vergleichsbeispiel | Cer-Gehalt [Gew.-%] | $TiO_2$-Gehalt [Gew.-%] | $Fe_2O_3$-Gehalt [Gew.-%] |
|---|---|---|---|
| Beispiel 2 | 0,29 | 26,2 | / |
| Beispiel 4 | <0,01 | 16,5 | / |
| Beispiel 6 | 0,27 | 9,1 | 11,3 |
| Vergleichsbeispiel 1 | < 0,01 | 26,7 | / |
| Vergleichsbeispiel 2 | <0,01 | 17,2 | / |
| Vergleichsbeispiel 4 | <0,01 | 9,3 | 11,5 |

**IIId Bestimmung des Kohlenstoffgehalts**

Der Kohlenstoffgehalt der erfindungsgemäßen Perlglanzpigmente wurde mittels Kohlenstofifanalysator CS-200, Fa. LECO Instrumente GmbH bestimmt.

Tabelle 3

| Beispiel | Kohlenstoffgehalt [Gew.-%] |
|---|---|
| Beispiel 3 | 0,077 |

**IV Charakterisierung der mit den erfindungsgemäßen Perlglanzpigmenten pigmentierten Pulverlacke**

**IVa Optische Beurteilung - Helligkeit L*, Deckfähigkeit, Effektmessungen**

Die erfindungsgemäßen Perlglanzpigmente sowie die Pigmente der Vergleichsbeispiele wurden nach dem Dry Blend Verfahren in den handelsüblichen Pulverlack Tiger Drylack Serie 68 glatt glänzend der Fa. Tiger eingearbeitet. Die Pigmentierungshöhe betrug jeweils 2,0 Gew.-%. Die Applikation auf Bleche erfolgte bei einer Applikationsspannung von 100 kV-100 μA mit der Spritzistole OptiSelect (Fa. ITWGema) in einer handelsüblichen Pulverkabine. Die Helligkeit L* sowie die Effektmessungen der Pulverlackapplikationen erfolgte mit einem Farbmessgerät Byk-mac der Fa. Byk-Gardner. Die Deckfähigkeit wurde visuell beurteilt. Zur Simulation von Effektänderungen bei direkter Beleuchtung wird der Glitzereffekt mit dem BYK-mac unter Verwendung einer hochauflösenden CCD-Kamera untersucht. Der Glitzereffekt, verursacht durch das Reflexionsvermögen der einzelnen Perlglanzpigmente, wird hauptsächlich bei direkter Sonnen- oder Lichteinstrahlung wahrgenommen und verändert sich in Abhängigkeit des Beleuchtungswinkels. Aus diesem Grund wird die Probe bei dem Byk-mac mit sehr hellen LEDs unter drei verschiedenen Winkeln (15°/ 45°/ 75°) beleuchtet. Mit der CCD-Kamera wird dabei senkrecht zur Oberfläche jeweils ein Bild aufgenommen. Die Bilder werden mit Hilfe von Bildverarbeitungsalgorithmen analysiert, wobei das Histogramm der Helligkeitsstufen als Basis für die Berechnung der Glitzerparameter verwendet wird. Diese Glitzerparameter bestehen aus der Glitzerintensität S_i sowie der Glitzerfläche S_a, wobei S_a einen Zahlenwert angibt, der dem Glitzereffekt bezogen auf eine vordefinierte Fläche entspricht.

Je höher der Zahlenwert von S_a, desto höher ist auch der vom Auge wahrnehmbare flächenmäßige Glitzereffekt.

Je höher der Zahlenwert von S_i, desto höher ist auch der vom Auge wahrnehmbare intensitätsbezogene Glitzereffekt.

Je höher die Zahlenwerte von S_a und S_i, desto glitzernder erscheint ein Effektpigment.
Bei auf den gleichen Glitzerwert normierten Perlglanzpigmenten, kann der S_a-Wert auch als Maß für die Ergiebigkeit betrachtet werden.
Als Maß für die Ergiebigkeit kann die Glitzerfläche S_a der erfindungsgemäßen Perlglanzpigmente im Vergleich zur Glitzerfläche S_a zum jeweils nicht oberflächenmodifizierten Ausgangsmaterial herangezogen werden.
Die erfindungsgemäßen Perlglanzpigmente sind hinsichtlich ihrer Glitzerfläche S_a Perlglanzpigmenten, ohne entsprechende Oberflächenmodifizierung deutlich überlegen. Bei einem Vergleich der Glitzerfläche S_a ist die mittlere Teilchengröße $D_{50}$ zu berücksichtigen. Es sind also nur Pigmente gleicher oder ähnlicher mittlerer Teilchengröße untereinander vergleichbar. Eine geringere mittlere Teilchengröße $D_{50}$, wie bei Beispiel 5, äußert sich in geringeren Werten für die Glitzerfläche S_a.

Tabelle 4

| **Beispiel/ Vergleichs-beispiel** | **Abrieb-beständigkeit** | **Byk-mac** | | | **Visuelle Beurteilung Deckung** |
|---|---|---|---|---|---|
| | | **L*** | **dL* (15°)** | **dS_a (S15°)** | |
| Vergleichsbeispiel 1 | i.O. | 21,1 | 0 | 0 | 3 |
| Beispiel 2 | i.O. | 36,3 | 17,5 | 7,3 | 2 |
| Vergleichsbeispiel 2 | i.O. | 16,8 | 0 | 0 | 3 |
| Beispiel 6 | i.O. | 33,1 | 18,1 | 2,9 | 2 |
| Vergleichsbeispiel 6 | i.O. | 17,7 | 0,9 | 0,2 | 3 |
| Vergleichsbeispiel 4 | i.O. | 17,3 | 0 | 0 | 2 |
| Vergleichsbeispiel 5 | n.i.O. | 21,8 | 4,6 | 3,8 | 1 |
| Beispiel 7 | i.O. | 23,2 | 5,9 | 6,0 | 1 |
| Beispiel 5 | i.O. | 26,5 | 9,3 | 6,8 | 1 |
| Beispiel 4 | i.O. | 28,0 | 10,7 | 7,1 | 1 |

i.O. = in Ordnung, n.i.O. = nicht in Ordnung
dL*(15°) = Helligkeitswert nach CIE-Lab bei einer Messgeometrie von 15° entfernt vom Glanzwinkel.
dL_aS(15°) = Sparkling Area gemessen bei einem Beleuchtungswinkel von 15°, was den Glitzereffekt bei Idealbedingungen am ehesten widerspiegelt.

Die erfindungsgemäßen oberflächenmodifizierten Perlglanzpigmente zeigen im Vergleich zu den Pigmenten der Vergleichsbeispiele in der Pulverlackierung einen deutlich ausgeprägteren optischen Effekt. Dieser Unterschied kann durch Messung der Helligkeitswerte L* nahe am Glanzwinkel, d. h. bei 25°, mit Hilfe des Farbmessgerätes Byk-mac der Fa. Byk-Gardner aufgezeigt werden. In Tabelle 4 sind die Helligkeitsunterschiede der mit den erfindungsgemäßen Perlglanzpigmenten pulverlackierten Bleche gegenüber dem entsprechenden, als Ausgangsmaterial eingesetzten Pigment, und den Pigmenten der Vergleichsbeispiele in der Pulverlackierung als dL* Werte angegeben. Es war hierbei zu erkennen, dass die mit den erfindungsgemäßen oberflächenmodifzierten Perlglanzpigmenten lackierten Bleche im Vergleich zu den mit den jeweils als Ausgangsmaterial eingesetzten Pigmenten der Vergleichsbeispiele lackierten Blechen, also bei einem Vergleich der Pulverlackierung mit den erfindungsgemäßen Perlglanzpigmente aus den Beispielen 2 und 6 zu den Pulverlackierungen mit Pigmenten aus den Vergleichsbeispielen 1 und 2 sowie aus den Beispielen 4 und 5 jeweils zum Vergleichsbeispiel 4, deutlich gestiegene Helligkeitswerte aufwiesen. Zwar bewirkten auch die Pigmente der Vergleichsbeispiele 5 und 6 im Vergleich zu den entsprechenden als Ausgangsmaterial eingesetzten Vergleichsbeispielen 4 und 2 in der jeweiligen Pulverlackierung einen geringfügigen Anstieg der Helligkeit, jedoch war hier der visuell wahrnehmbare Unterschied im optischen Erscheinungsbild nicht so stark ausgeprägt wie dies bei den mit den erfindungsgemäßen Perlglanzpigmenten pigmentierten Pulverlackierungen der Fall war. Bleche, welche mit Pulverlacken lackiert waren, die die erfindungsgemäßen Perlglanzpigmente enthielten, erschienen einem Betrachter bei visuellem Vergleich zu Blechen, welche Pigmente der Vergleichsbeispiele enthielten, deutlich homogener, d.h. mit deutlich einheitlicherer Struktur und glatterem Verlauf.

Ein weiterer sehr vorteilhafter Effekt, welcher mit dem Einsatz der erfindungsgemäßen Perlglanzpigmente in einem Pulverlack verbunden war, war die Zunahme von dessen Deckfähigkeit. Bei visueller Beurteilung ist dieser Effekt insbesondere deutlich bei Pulverlackierungen, welche die Eisenoxid umfassenden Perlglanzpigmente der Beispiele 4

und 5 enthielten. Die visuelle Beurteilung der Deckfähigkeit ist in Tabelle 4 anhand einer Skala von 1 bis 3 aufgezeigt. Hierbei steht 1 für "sehr gute Deckung", 2 für "mittelstarke Deckung" und 3 für "schlechte Deckung".

Bestimmung der Ergiebigkeit anhand des L*-Wertes

Hierzu wurde das Perlglanzpigment aus Vergleichsbeispiel 2 analog IVa in einen handelsüblichen Pulverlack des Typs Tiger Drylack Serie 68 glatt glänzend der Fa. Tiger mit 2 % Pigmentierungshöhe eingearbeitet. Parallel dazu wurde das erfindungsgemäße Perlglanzpigment aus Beispiel 6 in unterschiedlicher Pigmentierungshöhe von 1,0 %, 1,5 % und 2,0 % analog eingearbeitet, appliziert und die Helligkeitswerte mit dem Gerät Byk-mac der Fa. Byk-Gardner vermessen. Die Helligkeitswerte L* nahe am Glanzwinkel bei -15° sowie 15° sind in Tabelle 5 dargestellt.

Tabelle 5

| | Pigmentierungshöhe [%] | L*(-15°) | L*(15°) |
|---|---|---|---|
| Vergleichsbeispiel 2 | 2,0 | 51,2 | 42,3 |
| Beispiel 6 | 1,0 | 49,7 | 40,9 |
| Beispiel 6 | 1,5 | 56,4 | 45,8 |
| Beispiel 6 | 2,0 | 64,8 | 53,6 |

Der Tabelle ist sehr schön zu entnehmen, dass durch die erfindungsgemäße Oberflächenmodifizierung der Perlglanzpigmente im Vergleich zum unbehandelten Pigment deutlich ausgeprägtere bzw. stärkere Effekte bei gleicher Pigmentierungshöhe darstellbar sind. Dabei sind die Effekte so stark ausgeprägt, wie es mit bisherigem Stand der Technik noch nie möglich war.
Ebenso lässt sich durch eine Reduzierung der Pigmentierungshöhe der ursprüngliche Effekt des unbehandelten Pigmentes nachstellen. In unserem Beispiel lässt sich also selbiger Effekt mit ca. 50 % weniger Material kreieren. Die Wirtschaftlichkeit von Pulverlacken kann damit also deutlich erhöht werden.
Weiterhin hat sich gezeigt, dass bei reduzierten Pigmentierungshöhen die Verarbeitbarkeit des Pulverlackes positiv beeinflusst wird. Die für Perlglanzpigmente sonst oft übliche Bildung Entmischung durch anhaftendes Pigment am Prallteller sowie Elektrode konnte deutlich reduziert werden.

**IVb Abriebbeständigkeit**

Bleche, welche mit erfindungsgemäßen Perlglanzpigmenten enthaltenden Pulverlacken aus IVa lackiert waren, zeichneten sich weiterhin durch eine sehr gute Abriebbeständigkeit aus. Zwar konnte auch bei den Pulverlackierungen enthaltend Pigmente aus Vergleichsbeispiel 5 ein geringer Anstieg der Helligkeit beobachtet werden, jedoch waren die hiermit pigmentierten Pulverlacke nach der Applikation nicht abriebbeständig.

**IVc Extrusion**

Zur Herstellung des Pulverlackes wurden jeweils 100 g des Pigmentes gemäß nachstehender Tabelle 6 mit 900 g des handelsüblichen Pulverklarlackes Tiger Drylack Serie 68 glatt glänzend der Fa. Tiger gemischt und in einem Schneckenextruder des Typs Prism TSE 16 TC der Fa. Thermo bei 120°C mit einer Schneckendrehzahl von 320 U/min extrudiert. Das Extrudat wurde in Stücke gebrochen und mittels einer Prallfutter-Mühle zu einem Pulverlack verarbeitet. Die Applikation des Pulverlackes erfolgte auf Q-Panels (Einbrenn-Temperatur: 200° C, Einbrenndauer: 10 min). Die farbmetrische Vermessung der pulverlackierten Q-Panels erfolgte mit dem Farbmessgerät Byk-mac der Fa. Byk-Gardner.

Tabelle 6

| **Beispiel/ Vergleichs-beispiel** | **Pulverlackierung** | | |
|---|---|---|---|
| | **Abriebbeständigkeit** | **L*** | **dL*** |
| Vergleichsbeispiel 4 | i.O. | 12,79 | 0 |
| Vergleichsbeispiel 5 | n.i.O. | 14,57 | 1,78 |
| Beispiel 5 | i.O. | 16,66 | 3,87 |

(fortgesetzt)

| Beispiel/ Vergleichs-beispiel | Pulverlackierung | | |
|---|---|---|---|
| | Abriebbeständigkeit | L* | dL* |
| Beispiel 4 | i.O. | 17,96 | 5,17 |
| i. O. = in Ordnung, n. i. O. = nicht in Ordnung | | | |

Die Extrusion ist das günstigste Herstellungsverfahren für Pulverlacke. Trotz der bei diesem Verfahren für Effektpigmente vorherrschenden ungünstigen Bedingungen, zeigten Bleche, welche mit den erfindungsgemäßen Perlglanzpigmenten enthaltenden Pulverlacken lackiert waren, einen vergleichsweise deutlich ausgeprägten Glitzereffekt. Meßtechnisch lässt sich dieser visuell wahrnehmbare Eindruck, wie bereits in IVa beschrieben, durch die Helligkeitsunterschiede dL* darstellen. Bei einem Vergleich der Helligkeitswerte L* von Blechen, welche mit den erfindungsgemäßen Perlglanzpigmenten pigmentierten Pulverlacken nach der Extrusion lackiert waren und extrudierten Pulverlacken mit als Ausgangsmaterial eingesetzten Pigmenten der Vergleichsbeispiele, sind bei den erfindungsgemäßen Perlglanzpigmenten recht erhöhte Helligkeitswerte festzustellen (Beispiel 4 und 5, jeweils verglichen mit Vergleichsbeispiel 4). Auch mit dem Pigment aus Vergleichsbeispiel 5 pigmentierte Pulverlacke zeigen nach der Applikation leicht erhöhte Helligkeitswerte im Vergleich zu einer Pulverlackapplikation, welche mit dem als Ausgangsmaterial eingesetzten Pigment pigmentiert war. Allerdings zeigte sich auch hier, dass die Abriebbeständigkeit nicht zufriedenstellend war.

**IVd Schnellbewitterungstest QUV-B (313nm)**

Der Schnellbewitterungstest der gemäß IVa pulverlackierten Bleche erfolgte mit Hilfe des Schnellbewitterungsgeräts QUV/SE der Fa. Q-Lab mit Strahlungsregelung Solar Eye, welches unter nachfolgenden Parametern verwendet wurde.

| | |
|---|---|
| Strahler: | UVB-313 nm |
| Zyklus: | 4 h Betauen, T= 40°C +/- 2° |
| | 4 h Bestrahlen, T = 50°C +/- 2°C |
| Bestrahlungsstärke: | 0,75 $W/m^2/nm$ |

Nach 0 h, 288 h und 600 h Exposition wurden der Glanzerhalt der jeweiligen Bleche mit dem Gerät Byk Hazeguard 100 der Fa. Byk-Gardner ermittelt. Die Ergebnisse sind in nachfolgender Tabelle 7 gegenübergestellt.

Tabelle 7

| Beispiel/ Vergleichs-beispiel | Glanzerhalt [%] nach QUV Belastung [h] | | |
|---|---|---|---|
| | 0 | 288 | 600 |
| Nur Lack | 100 | 94 | 65 |
| Vergleichsbeispiel 1 | 100 | 94 | 65 |
| Vergleichsbeispiel 2 | 100 | 93 | 73 |
| Vergleichsbeispiel 4 | 100 | 94 | 71 |
| Vergleichsbeispiel 7 | 100 | 96 | 64 |
| Vergleichsbeispiel 8 | 100 | 93 | 71 |
| Beispiel 2 | 100 | 93 | 73 |
| Beispiel 6 | 100 | 96 | 81 |
| Beispiel 3 | 100 | 95 | 74 |
| Beispiel 5 | 100 | 99 | 84 |
| Beispiel 4 | 100 | 100 | 82 |

Aus Tabelle 7 ist deutlich zu ersehen, dass Pulverlackapplikationen, welche mit den erfindungsgemäßen Perlglanzpigmenten pigmentiert waren im Vergleich zu Pulverlackapplikationen, welche mit den als Ausgangsmaterial eingesetzten Pigmenten der Vergleichsbeispiele pigmentiert waren, vergleichbare oder deutlich geringere Glanzverluste aufwiesen. Besonders eindrucksvoll zeigte sich der Glanzerhalt bei Applikationen der mit den erfindungsgemäßen Perlglanzpigmenten aus den Beispielen 4 und 5 pigmentierten Pulverlacke. Der Unterschied zu Pulverlackapplikationen, welche mit den Pigmenten des Vergleichbeispiels 4 pigmentiert waren, wurde hier insbesondere nach einem Bewitterungszeitraum von 600h deutlich. Auch im Vergleich zu Pulverlackapplikationen, welche herkömmlich stabilisierte Perlglanzpigmente wie z. B. aus den Vergleichsbeispielen 7 und 8 umfassten, zeigten die mit den erfindungsgemäßen Perlglanzpigmenten pigmentierten Pulverlackapplikationen deutliche Stabilitätsvorteile, was sich nach der Bewitterung durch guten Glanzerhalt äußerte.

**IVe Beständigkeit gegen Mörtel**

Die Beständigkeit der pulverlackierten Bleche aus IVa gegen Mörtel wurde gemäß "Internationale Qualitätsrichtlinien für die Beschichtung von Bauteilen aus Aluminium", GSB AL 631, Ausgabe Januar 2012, Herausgeber GSB International e.V., 9.19. Mörteltest, S. 46-47 geprüft. Die Effektänderung auf dem Prüfblech wurde nach folgendem Bewertungsschema visuell bewertet:

MT 1: Kein Unterschied zwischen der getesteten Oberfläche und der Vorlage (nicht getestete Oberfläche)
MT 2: Kaum sichtbare Farb- und Effektveränderung
MT 3: Sichtbare Farb- und Effektveränderung
MT 4: Deutlich sichtbare Farb- und Effektveränderung
MT 5: Markante Farbveränderung - vollständiger Effektverlust

Tabelle 8

| Beispiel/ Vergleichsbeispiel | Mörteltest |
|---|---|
| **Vergleichsbeispiel** 10 | MT 5 |
| **Vergleichsbeispiel** 9 | MT 4 |
| **Vergleichsbeispiel** 4 | MT 2 |
| **Vergleichsbeispiel** 5 | MT 3 |
| Beispiel 2 | MT 1 |
| Beispiel 7 | MT 1 |
| Beispiel 6 | MT 1 |
| Beispiel 5 | MT 1 |

Im Mörteltest siehe Tabelle 8 zeigte sich ein Pulverlack, welcher die Pigmente aus Vergleichsbeispiel 10 enthielt, am unstabilsten. Dies könnte an der für Leafing-Pigmente typischen Tendenz, sich planparallel an der oberen Grenzfläche des Pulverlackfilms auszurichten gelegen haben, wodurch die Pigmente weniger stark in die schützende Matrix des Pulverlackfilms eingebunden und daher weniger vor mechanischen und chemischen Einflüssen von außen geschützt sind als z.B. in der Matrix eingebettete Non-leafing-Pigmente.
Die erfindungsgemäßen Perlglanzpigmente weisen ebenfalls einen ausgeprägten Leafingeffekt in einer Pulverlackapplikation auf. Aufgrund der hohen Vernetzungsdichte durch die Oberflächenmodifizierung als auch aufgrund der Natur von Perlglanzpigmenten zeigten sich diese im Mörteltest jedoch inert. Gleichzeitig waren Pulverlacke enthaltend die erfindungsgemäßen Perlglanzpigmente solchen, welche mit den Leafing-Pigmenten aus Vergleichsbeispiel 5 pigmentiert waren, im Mörteltest überlegen.

**V Kosmetische Anwendungsbeispiele**

Anwendungstechnisches Beispiel 1: Nagellack

| INCI Name | Produktname | Gew.-% | Hersteller/ Lieferant |
|---|---|---|---|
| *Phase A* | | | |
| | **Perlglanzpigment aus Beispiel 4** | **2,00** | |
| *Phase B* | | | |
| Butylacetat (and) Ethylacetat (and) Nitrocellulose (and) Isopropyl Alcohol | International Lacquers Nailpolish & Care Base 359 | 98,00 | International Lacquers |

Das Perlglanzpigment aus Beispiel 4 kann in einem Bereich von 0,1 bis 10,0 Gew.-%, bezogen auf das Gesamtgewicht der Nagellackformulierung, eingesetzt werden. Der Ausgleich auf 100 Gew.-% der Formulierung kann mit International Lacquers Nailpolish erfolgen.

Phase A und Phase B wurden gemischt und anschließend in ein angemessenes Behältnis abgefüllt.

**Anwendungstechnisches Beispiel 2:** Nagellack mit "soft touch"-Effekt

| INCI Name | Produktname | Gew.-% | Hersteller/ Lieferant |
|---|---|---|---|
| *Phase A* | | | |
| | **Perlglanzpigment aus Beispiel 3** | **2,00** | |
| | Ceraflour 913 | 5,00 | Byk Chemie |
| *Phase B* | | | |
| Butylacetat (and) Ethylacetat (and) Nitrocellulose (and) Isopropyl Alcohol | International Lacquers Nailpolish & Care Base 359 | 93,00 | International Lacquers |

Das Perlglanzpigment aus Beispiel 3 kann in einem Bereich von 0,1 bis 10,0 Gew.-%, bezogen auf das Gesamtgewicht der Nagellackformulierung, eingesetzt werden. Der Ausgleich auf 100 Gew.-% der Formulierung kann mit International Lacquers Nailpolish erfolgen.

Phase A wurde gemischt, zu Phase B hinzugefügt und anschließend wurde der Nagellack in ein angemessenes Behältnis abgefüllt.

## Patentansprüche

1. Perlglanzpigmente mit plättchenförmigem nichtmetallischen Substrat, wobei die Perlglanzpigmente mindestens eine Metalloxid-, Metallhydroxid- und/oder Metalloxidhydratschicht aufweisen,
**dadurch gekennzeichnet,**
**dass** die Oberfläche der Perlglanzpigmente gebundenes Polysiloxan der Formel (I) aufweist:

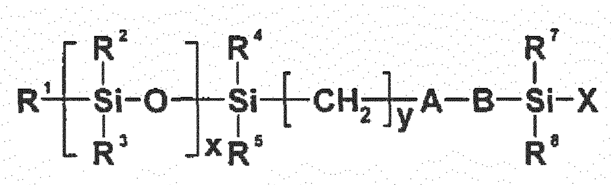

(I)

wobei

$R^1$ für einen gesättigten oder ungesättigten, geradkettigen oder verzweigten Alkylrest mit 1 bis 30 Kohlenstoffatomen und/oder einen Arylrest, Alkylarylrest oder Arylalkylrest mit 6 bis 30 Kohlenstoffatomen steht;
$R^2$, $R^3$, $R^4$ und $R^5$ unabhängig voneinander für gesättigte oder ungesättigte, geradkettige oder verzweigte Alkylreste mit 1 bis 6 Kohlenstoffatomen und/oder Arylreste, Alkylarylreste und/oder Arylalkylreste mit 6 bis 12 Kohlenstoffatomen stehen;
x = 1 bis 200;
y = 2 bis 30;
A für $(CH_2)_n$, O, S, $(OCH_2CH_2)_m$ oder $C_6R^6{}_4$ steht, wobei n = 0 oder 1 und m = 0 bis 30 und $R^6$ für H und/oder Alkyl mit 1 bis 6 Kohlenstoffatomen steht;
B für $(CH_2)_z$ oder $(OCH_2CH_2)_w$ steht, wobei z = 0 bis 30 und w = 0 bis 30; und
$R^7$ und $R^8$ unabhängig voneinander für O, OH oder einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen, wobei X für O oder OH steht und $R^7$, $R^8$ und/oder X an die Oberfläche der Periglanzpigmente gebunden ist, und wobei die mindestens eine Metalloxid-, Metallhydroxid- und/oder Metalloxidhydratbeschichtung

(a) wenigstens eine hochbrechende Schicht oder wenigstens eine alternierend hoch- und niedrigbrechende Schichtenfolge sowie
(b) eine Schutzschicht

umfasst, und
wobei die Schutzschicht Metalloxide, Metallhydroxide und/oder Metalloxidhydrate von Silizium, Cer, Chrom oder Mischungen davon umfasst oder aus ihnen besteht.

2. Perlglanzpigmente nach Anspruch 1,
**dadurch gekennzeichnet,**
**dass** die Schutzschicht aus der Gruppe, die aus Ceroxid-, Cerhydroxid-, Ceroxidhydrat, Siliziumoxid-, Siliziumhydroxid-, Siliziumoxidhydrat und Mischungen davon besteht, ausgewählt wird.

3. Perlglanzpigmente nach Anspruch 1,
**dadurch gekennzeichnet,**
**dass** $R^2$, $R^3$, $R^4$ und $R^5$ unabhängig voneinander für gesättigte Alkylreste stehen und vorzugsweise aus der Gruppe, die aus Methyl, Ethyl, n-Propyl, Isopropyl, n-Butyl, sec-Butyl und tert-Butyl besteht, ausgewählt werden und/oder für einen aromatischen Rest, vorzugsweise Phenyl, stehen.

4. Perlglanzpigmente nach einem der vorstehenden Ansprüche,
**dadurch gekennzeichnet,**
**dass** $R^1$ für Methyl, Ethyl, sec.-Butyl, n-Propyl, Isopropyl, n-Butyl, sec-Butyl, tert-Butyl, n-Pentyl, Neopentyl, Cyclopentyl, n-Hexyl, Cyclohexyl, n-Octyl, 2-Ethylhexyl, Phenyl, Methylphenyl oder Ethylphenyl steht.

5. Perlglanzpigmente nach einem der vorstehenden Ansprüche,
**dadurch gekennzeichnet,**
**dass** die Perlglanzpigmente einen Gehalt an Polysiloxan gemäß Formel (I) von 0,05 bis 10 Gew.-%, bezogen auf das Gesamtgewicht des Perlglanzpigmentes, aufweisen.

6. Verfahren zur Herstellung von Perlglanzpigmenten gemäß einem der vorherigen Ansprüche,
**dadurch gekennzeichnet,**
**dass** die Oberfläche der Perlglanzpigmente mit einem Polysiloxan der Formel (II)

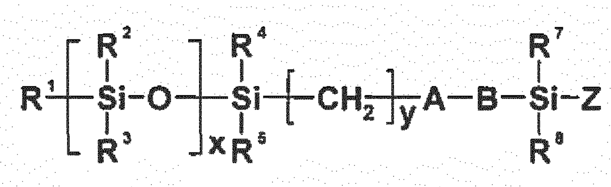

(II)

umgesetzt wird, wobei Z für eine hydrolysierbare Gruppe steht und $R^7$ und $R^8$ unabhängig voneinander jeweils für eine hydrolysierbare Gruppe stehen oder $R^7$ und $R^8$ unabhängig voneinander für einen gesättigten oder ungesättigten, geradkettigen oder verzweigten Alkylrest mit 1 bis 6 Kohlenstoffatomen und/oder einen Arylrest, Alkylarylrest oder Arylalkylrest mit 6 bis 9 Kohlenstoffatomen stehen.

**7.** Verfahren nach Anspruch 6,
**dadurch gekennzeichnet,**
**dass** die hydrolysierbare Gruppe für Halogen, $OR^9$ und/oder $O(C{=}O)R^9$ steht, wobei $R^9$ für einen gesättigten, geradkettigen oder verzweigten Alkylrest mit 1 bis 6 Kohlenstoffatomen steht, wobei der Alkylrest O enthalten kann.

**8.** Verwendung von Perlglanzpigmenten gemäß einem der Ansprüche 1 bis 5 in Pulverlacken,

**9.** Verwendung von Perlglanzpigmenten gemäß einem der Ansprüche 1 bis 5 zur Herstellung von Pulverlacken in Extrusionsverfahren, Dry blend-Verfahren oder Bondingverfahren.

**10.** Verwendung von Perlglanzpigmenten gemäß Anspruch 9 zur Herstellung von Pulverlacken durch Mischen im Dry blend-Verfahren.

**11.** Pulverlack enthaltend mindestens ein Bindemittel sowie wenigstens ein Perlglanzpigment nach einem der Ansprüche 1 bis 5.

**12.** Verfahren zur Herstellung eines Pulverlackes,
welches folgende Schritte umfasst:

(a) Extrudieren eines Perlglanzpigmentes nach einem der Ansprüche 1 bis 5 zusammen mit Bindemittel und optional weiteren Bestandteilen eines Pulverlacks,
(b) optional Vermahlen des in Schritt (a) erhaltenen Extrudats.

**13.** Dry blend-Verfahren zur Herstellung eines Pulverlackes im durch Mischen eines Perlglanzpigmentes nach einem der Ansprüche 1 bis 5 mit einem Bindemittel und optional weiteren Bestandteilen eines Pulverlackes.

**14.** Bonding-Verfahren zur Herstellung eines Pulverlackes,
welches folgende Schritte umfasst:

(a) Mischen eines Perlglanzpigmentes nach einem der Ansprüche 1 bis 5 mit einem Bindemittel und optional weiteren Bestandteilen eines Pulverlackes,
(b) Erwärmen der in Schritt (a) erhaltenen Mischung bis zur Erweichungstemperatur des Bindemittels und optional weiteren Bestandteilen eines Pulverlackes unter Anhaftung von Perlglanzpigmenten und Bindemitteln sowie optional weiteren Bestandteilen eines Pulverlackes
(c) Abkühlen der in Schritt (b) erhaltenen Mischung.

## Claims

**1.** Pearlescent pigments with a platelet-shaped non-metal substrate, the pearlescent pigments comprising at least one metal oxide, metal hydroxide and/or metal oxide hydrate layer,
**characterised in that**
the surface of the pearlescent pigments comprises bonded polysiloxane of formula (I):

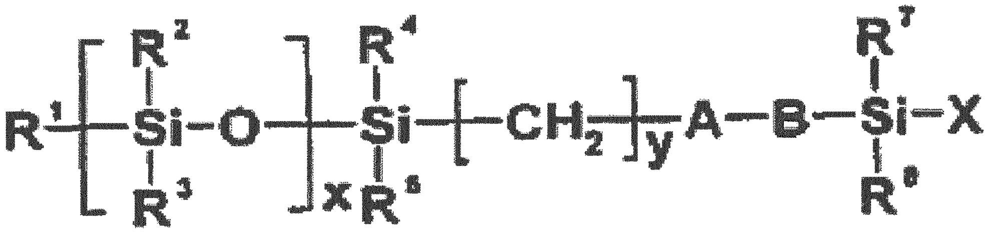

(I)

in which

$R^1$ stands for a saturated or unsaturated, linear or branched alkyl radical having 1 to 30 carbon atoms and/or an aryl radical, alkylaryl radical or arylalkyl radical having 6 to 30 carbon atoms;
$R^2$, $R^3$, $R^4$ and $R^5$, independently of one another, stand for saturated or unsaturated, linear or branched alkyl radicals having 1 to 6 carbon atoms and/or aryl radicals, alkylaryl radicals and/or arylalkyl radicals having 6 to 12 carbon atoms;
x = 1 to 200;
y = 2 to 30;
A stands for $(CH_2)_n$, O, S, $(OCH_2CH_2)_m$ or $C_6R^6{}_4$, where n = 0 or 1 and m = 0 to 30 and $R^6$ stands for H and/or alkyl having 1 to 6 carbon atoms;
B stands for $(CH_2)_z$ or $(OCH_2CH_2)_w$ where z = 0 to 30 and w = 0 to 30; and
$R^7$ and $R^8$, independently of one another, stand for O, OH or a saturated or unsaturated, linear or branched alkyl radical having 1 to 6 carbon atoms and/or an aryl radical, alkylaryl radical or arylalkyl radical having 6 to 9 carbon atoms where X stands for O or OH and $R^7$, $R^8$ and/or X is bonded to the surface of the pearlescent pigments, and the at least one metal oxide, metal hydroxide and/or metal oxide hydrate coating comprises

(a) a high refractive index layer or at least one alternating high and low refractive index layer sequence and
(b) a protective layer,

and
the protective layer comprises or consists of metal oxides, metal hydroxides and/or metal oxide hydrates of silicon, cerium, chromium or mixtures thereof.

**2.** Pearlescent pigments as claimed in claim 1,
**characterised in that**
the protective layer is selected from the group comprising cerium oxide, cerium hydroxide, cerium oxide hydrate, silicon oxide, silicon hydroxide, silicon oxide hydrate and mixtures thereof.

**3.** Pearlescent pigments as claimed in claim 1,
**characterised in that**
$R^2$, $R^3$, $R^4$ and $R^5$, independently of one another, stand for saturated alkyl radicals and are preferably selected from the group comprising methyl, ethyl, n-propyl, isopropyl, n-butyl, sec-butyl and tert-butyl, and/or stand for an aromatic radical, preferably phenyl.

**4.** Pearlescent pigments as claimed in one of the preceding claims,
**characterised in that**
$R^1$ stands for methyl, ethyl, sec.-butyl, n-propyl, isopropyl, n-butyl, sec.-butyl, tert.-butyl, n-pentyl, neopentyl, cyclopentyl, n-hexyl, cyclohexyl, n-octyl, 2-ethylhexyl, phenyl, methylphenyl or ethylphenyl.

**5.** Pearlescent pigments as claimed in one of the preceding claims,
**characterised in that**

the pearlescent pigments have a content of polysiloxane of formula (I) of 0.05 to 10 % by weight relative to the total weight of the pearlescent pigment.

**6.** Method of producing pearlescent pigments as claimed in one of the preceding claims,
**characterised in that**
the surface of the pearlescent pigments is reacted with a polysiloxane of formula (II)

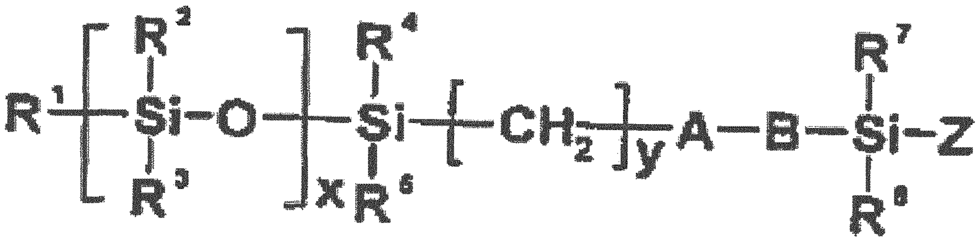

(II)

in which Z stands for a hydrolysable group and $R^7$ and $R^8$, independently of one another, each stand for a hydrolysable group or $R^7$ and $R^8$, independently of one another, stand for a saturated or unsaturated, linear or branched alkyl radical having 1 to 6 carbon atoms and/or an aryl radical, alkylaryl radical or arylalkyl radical having 6 to 9 carbon atoms.

**7.** Method as claimed in claim 6,
**characterised in that**
the hydrolysable group stands for halogen, $OR^9$ and/or $O(C{=}O)R^9$, where $R^9$ stands for a saturated, linear or branched alkyl radical having 1 to 6 carbon atoms, and the alkyl radical may contain O.

**8.** Use of pearlescent pigments as claimed in one of claims 1 to 5 in powder coatings.

**9.** Use of pearlescent pigments as claimed in one of claims 1 to 5 for producing powder coatings in extrusion processes, dry blending processes or bonding processes.

**10.** Use of pearlescent pigments as claimed in claim 9 for producing powder coatings by mixing using the dry blending process.

**11.** Powder coating containing at least one binding agent and at least one pearlescent pigment as claimed in one of claims 1 to 5.

**12.** Method of producing a powder coating,
comprising the following steps:

(a) extruding a pearlescent pigment as claimed in one of claims 1 to 5 together with binding agent and optionally other components of a powder coating,
(b) optionally grinding the extrudate obtained in step (a).

**13.** Dry blending process for producing a powder coating by mixing a pearlescent pigment as claimed in one of claims 1 to 5 with a binding agent and optionally other components of a powder coating.

**14.** Bonding process for producing a powder coating,
comprising the following steps:

(a) mixing a pearlescent pigment as claimed in one of claims 1 to 5 with a binding agent and optionally other

components of a powder coating,
(b) heating the mixture obtained in step (a) to the softening temperature of the binding agent and optionally other components of a powder coating, thereby adhering the pearlescent pigments and binding agents and optionally other components of a powder coating,
(c) cooling the mixture obtained in step (b).

**Revendications**

1. Pigments nacrés comportant un substrat non métallique lamellaire, les pigments nacrés présentant au moins une couche d'un oxyde métallique, d'un hydroxyde métallique et/ou d'un oxyde métallique hydraté,
**caractérisés en ce que**
la surface des pigments nacrés présente un polysiloxane lié, de formule (I) :

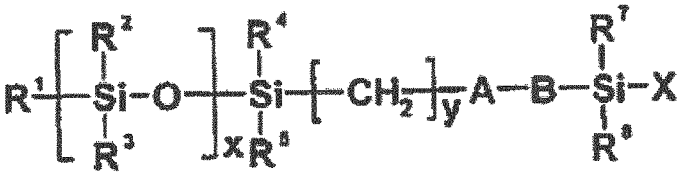

(I)

dans laquelle

$R^1$ représente un radical alkyle saturé ou insaturé, à chaîne droite ou ramifiée, ayant 1 à 30 atomes de carbone, et/ou un radical aryle, un radical alkylaryle ou un radical arylalkyle ayant 6 à 30 atomes de carbone ;
$R^2$, $R^3$, $R^4$ et $R^5$ représentent indépendamment les uns des autres des radicaux alkyle saturés ou insaturés, à chaîne droite ou ramifiée, ayant 1 à 6 atomes de carbone, et/ou des radicaux aryle, des radicaux alkylaryle et/ou des radicaux arylalkyle ayant 6 à 12 atomes de carbone ;
x = 1 à 200 ;
y = 2 à 30 ;
A représente $(CH_2)_n$, O, S, $(OCH_2CH_2)_m$ ou $C_6R^6{}_4$, où n = 0 ou 1 et m = 0 à 30, et $R^6$ représente H et/ou un groupe alkyle ayant 1 à 6 atomes de carbone ;
B représente $(CH_2)_z$ ou $(OCH_2CH_2)_w$, où z = 0 à 30 et w = 0 à 30 ; et
$R^7$ et $R^8$ représentent chacun indépendamment de l'autre O, OH ou un radical alkyle saturé ou insaturé, à chaîne droite ou ramifiée, ayant 1 à 6 atomes de carbone, et/ou un radical aryle, alkylaryle ou arylalkyle ayant 6 à 9 atomes de carbone, où X représente O ou OH, et $R^7$, $R^8$ et/ou X sont liés à la surface du pigment nacré, et dans lesquels l'au moins un revêtement d'un oxyde métallique, d'un hydroxyde métallique et/ou d'un oxyde métallique hydraté, comprend :

(a) au moins une couche à grand indice de réfraction ou au moins une séquence de couches ayant en alternance un grand indice de réfraction et un petit indice de réfraction, ainsi que
(b) une couche de protection,

et
dans lesquels la couche de protection comprend des oxydes métalliques, des hydroxydes métalliques et/ou des oxydes métalliques hydratés de silicium, de cérium, de chrome, ou des mélanges de ceux-ci, ou en est constituée.

2. Pigments nacrés selon la revendication 1,

**caractérisés en ce que**
la couche de protection est choisie dans le groupe constitué par l'oxyde de cérium, l'hydroxyde de cérium, l'oxyde de cérium hydraté, l'oxyde de silicium, l'hydroxyde de silicium, l'oxyde de silicium hydraté, ou les mélanges de ceux-ci.

3. Pigments nacrés selon la revendication 1,

**caractérisés en ce que**
$R^2$, $R^3$, $R^4$ et $R^5$ représentent indépendamment les uns des autres des radicaux alkyle saturés et sont choisis de préférence dans le groupe consistant en les groupes méthyle, éthyle, n-propyle, isopropyle, n-butyle, sec-butyle et tert-butyle, et/ou représentent chacun un radical aromatique, de préférence le groupe phényle.

**4.** Pigments nacrés selon l'une des revendications précédentes,

**caractérisés en ce que**
$R^1$ représente un groupe méthyle, éthyle, sec-butyle, n-propyle, isopropyle, n-butyle, sec-butyle, tert-butyle, n-pentyle, néopentyle, cyclopentyle, n-hexyle, cyclohexyle, n-octyle, 2-éthylhexyle, phényle, méthylphényle ou éthylphényle.

**5.** Pigments nacrés selon l'une des revendications précédentes,

**caractérisés en ce que**
les pigments nacrés présentent une teneur en polysiloxane selon la formule (I) de 0,05 à 10 % en poids, par rapport au poids total du pigment nacré.

**6.** Procédé de fabrication de pigments nacrés selon l'une des revendications précédentes,

**caractérisé en ce que**
la surface des pigments nacrés est mise à réagir avec un polysiloxane de formule (II)

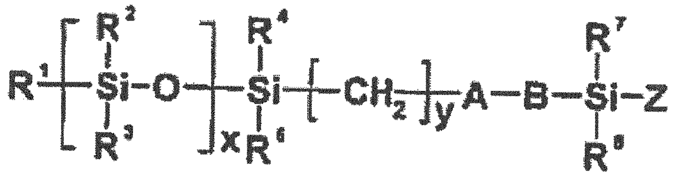

(II)

dans laquelle Z représente un groupe hydrolysable, et $R^7$ et $R^8$ représentent chacun indépendamment de l'autre un groupe hydrolysable, ou $R^7$ et $R^8$ représentent chacun indépendamment de l'autre un radical alkyle saturé ou insaturé, à chaîne droite ou ramifiée, ayant 1 à 6 atomes de carbone, et/ou un radical aryle, un radical alkylaryle ou un radical arylalkyle ayant 6 à 9 atomes de carbone.

**7.** Procédé selon la revendication 6,

**caractérisé en ce que**
le groupe hydrolysable représente un halogène, $OR^9$ et/ou $O(C{=}O)R^9$, où $R^9$ représente un radical alkyle saturé, à chaîne droite ou ramifiée, ayant 1 à 6 atomes de carbone, le radical alkyle pouvant contenir O.

**8.** Utilisation de pigments nacrés selon l'une des revendications 1 à 5 dans des peintures en poudre.

**9.** Utilisation de pigments nacrés selon l'une des revendications 1 à 5 pour la fabrication de peintures en poudre dans des procédés par extrusion, des procédés de mélange à sec ou des procédés par collage.

**10.** Utilisation de pigments nacrés selon la revendication 9 pour la fabrication de peintures en poudre par mélange dans le procédé par mélange à sec.

**11.** Peinture en poudre contenant au moins un liant, ainsi qu'au moins un pigment nacré selon l'une des revendications 1 à 5.

**12.** Procédé de fabrication d'une peinture en poudre, comprenant les étapes suivantes :

(a) extrusion d'un pigment nacré selon l'une des revendications 1 à 5, en même temps que d'un liant et en option d'autres constituants d'une peinture en poudre,

(b) en option, broyage de l'extrudat obtenu dans l'étape (a).

**13.** Procédé de mélange à sec pour la fabrication d'une peinture en poudre par mélange d'un pigment nacré selon l'une des revendications 1 à 5 avec un liant et en option d'autres constituants d'une peinture en poudre.

**14.** Procédé de collage pour la fabrication d'une peinture en poudre, comprenant les étapes suivantes :

(a) mélange d'un pigment nacré selon l'une des revendications 1 à 5 avec un liant et en option d'autres constituants d'une peinture en poudre,
(b) chauffage du mélange obtenu dans l'étape (a) jusqu'à la température de ramollissement du liant et en option d'autres constituants d'une peinture en poudre, avec collage de pigments nacrés et de liants, et en option d'autres constituants d'une peinture en poudre,
(c) refroidissement du mélange obtenu dans l'étape (b).

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2318463 A1
- EP 0141174 A1
- DE 102005037612 A1
- WO 2009156275 A1
- EP 0289240 A1
- WO 2004056716 A1
- WO 2005063637 A1
- EP 1980594 B1
- DE 102009037935 A1
- DE 102009037934 A1
- DE 102009037933 A1
- DE 102009037932 A1


### In der Beschreibung aufgeführte Nicht-Patentliteratur


- **BYK-GARDNER.** *Qualitätskontrolle für Lacke und Kunststoffe,* 2011, 97, , 98
- Internationale Qualitätsrichtlinien für die Beschichtung von Bauteilen aus Aluminium. GSB AL 631. 2012, 46-47